# EUROPEAN PATENT SPECIFICATION

(11) **EP 3 476 475 B1**
(45) Date of publication and mention of the grant of the patent: **06.04.2022**
(21) Application number: 17001782.6
(22) Date of filing: 27.10.2017
(51) Int. Cl.: B01J 20/20, B32B 18/00, C04B 35/16, C04B 35/52, C04B 38/00, H01M 4/96, C01B 32/00

(54) **PRODUCTION OF A POROUS CARBON PRODUCT**
HERSTELLUNG EINES PORÖSEN KOHLENSTOFFPRODUKTS
PRODUCTION D'UN PRODUIT À BASE DE CARBONE POREUX

(43) Date of publication of application: 01.05.2019
(73) Proprietor: Heraeus Battery Technology GmbH, 63450 Hanau (DE)
(72) Inventor: HOFMANN, Achim, 63450 Hanau (DE); HÜNERMANN, Michael, 63450 Hanau (DE); SAMUELIS, Dominik, 63450 Hanau (DE); TROMMER, Martin, 63450 Hanau (DE); WESSELY, Frank, 63450 Hanau (DE)
(74) Representative: Herzog IP Patentanwalts GmbH

(56) References cited:
- DE-A1-102011 013 075
- US-A1- 2012 178 618
- US-A1- 2012 301 387
- US-A1- 2013 209 891
- US-B2- 9 718 690

## Description

The present invention generally relates to a process for the production of a porous carbon product. The present disclosure also relates to a porous carbon product. The porous carbon product is disclosed but is not part of the invention. The invention is as disclosed in the claims.

Processes for producing a porous carbon material using a template acting as negative to shape the carbon are known in the prior art. Therein, the carbon material is characterised by a pore structure which is substantially predetermined by the structure of the template material. The template can for example be made from a silicon oxide. A process for producing a silicon oxide template known in the prior art is the so called sol-gel process. The sol-gel route to preparation of silicon oxide is well known to the skilled person. For example, producing a monolithic silica body via the sol gel process is described in US 06514454 B1.

Additionally, a porous carbon material which is known in the prior art is carbon black. Carbon black is produced by incomplete combustion of heavy petroleum products such as FCC tar, coal tar, ethylene cracking tar, and a small amount from vegetable oil. Such a process for the production of carbon black is for example disclosed in US 07655209 B2. The applications of porous carbon are generally based on the properties of the pore structure. Known applications are electrodes, such as in lithium ion cells in which simultaneous transport of ions and electrons through the electrode material is required; catalysts, in which a high active surface area and pore accessibility are required; and fuel cells, in which transport of fuel and electrical conductivity are required.

Each one of documents DE 10 2011 013075 A1, US 2012/301387 A1, US 2013/209891 A1 and US 9 718 690 B2 discloses a process for the production of a porous carbon product comprising the process steps of providing a substrate surface, depositing silicon dioxide as a layer on the substrate surface, thereby obtaining a porous silicon dioxide material, contacting the porous silicon dioxide material with a first carbon source thereby obtaining a first precursor comprising the porous silicon dioxide material and the first carbon source, heating the first precursor thereby obtaining a second precursor comprising the porous silicon dioxide material and carbon, and at least partially removing the silicon dioxide in the second precursor, thereby obtaining the porous carbon product.

Generally, it is an object of the present invention to at least partly overcome a disadvantage arising from the prior art. It is an object of the disclosure to provide an improved porous carbon material. It is another object of the disclosure to provide a template material suitable for producing an improved carbon material. It is an object of the invention to provide a process for producing a porous carbon material, wherein the process has an increased number of degrees of freedom for predetermining a pore size distribution of the porous carbon material. It is an object of the invention to provide a process for the preparation of a porous carbon product which is easier to perform.

It is an object of the invention to provide a process for the preparation of a porous carbon product with a higher energy efficiency.

It is an object of the invention to provide a process for the preparation of a porous carbon product with a higher process capacity.

It is an object of the invention to provide a process for the preparation of a porous carbon product with increased homogeneity.

It is an object of the invention to provide a process for the preparation of a porous carbon product with a more homogeneous pore size distribution.

It is an object of the invention to provide a process for the preparation of a porous carbon product with a more highly controllable pore size distribution.

It is an object of the invention to provide a process for the preparation of a porous carbon product with a more homogeneous particle size distribution.

It is an object of the invention to provide a process for the preparation of a porous carbon product with a more highly controllable particle size distribution.

It is an object of the disclosure to provide an electrochemical cell, preferably a Li-ion cell, having improved electrical properties.

It is an object of the disclosure to provide an electrochemical cell, preferably a Li-ion cell, having more highly controllable electrical properties.

It is an object of the disclosure to provide an electrode having improved electrical properties.

It is an object of the disclosure to provide an electrode having more highly controllable electrical properties.

It is an object of the disclosure to provide a porous catalyst material having improved catalytic properties, in particular an improved access to active sites.

It is an object of the disclosure to provide a porous catalyst materials having more highly controllable catalytic properties, in particular more highly controllable catalytic selectivity.

It is an object of the invention to provide a process for the preparation of a porous carbon product with lower impurity concentration.

It is an object of the disclosure to provide a Li-ion cell with higher calendar lifetime.

It is an object of the disclosure to provide a Li-ion cell with higher cycle lifetime.

It is an object of the disclosure to provide a Li-ion cell with reduced defect rate.

A contribution to at least one of the above objects is made by the independent claims and the following embodiments. The dependent claims provide preferred embodiments of the present invention which also serve to solve at least one of the above mentioned objects.
|1| A process for the production of a porous carbon product comprising the process steps of:
   a) Providing a substrate surface;
   b) Depositing silicon dioxide as a layer on the substrate surface, thereby obtaining a porous silicon dioxide material;
   c) Contacting the porous silicon dioxide material on the substrate surface with a first carbon source thereby obtaining a first precursor comprising the porous silicon dioxide material and the first carbon source;
   d) Heating the first precursor thereby obtaining a second precursor comprising the porous silicon dioxide material and carbon; and
   e) At least partially removing the silicon dioxide in the second precursor, thereby obtaining the porous carbon product.
|2| The process according to embodiment |1|, wherein one or more of the following criteria is fulfilled:
   a. The deposition in step b) is performed at a deposition location, wherein the deposition location and the substrate surface are movable relative to each other;
   b. The contacting in step c) is performed at a contacting location, wherein the contacting location and the substrate surface are movable relative to each other;
   c. The heating in step d) is performed at a heating location, wherein the heating location and the substrate surface are movable relative to each other;
   d. The at least partial removal in step e) is performed at a removal location, wherein the removal location and the substrate surface are movable relative to each other;
   Each of the above criteria could be combined and form one aspect of this embodiment. The following combinations of criteria are preferred aspects of this embodiment: a, b, c, d, ab, ac, ad, bc, bd, cd, bcd, acd, abd, abc, abcd. In a preferred aspect of this embodiment, the substrate surface is moving and one or more, preferably all of the following occur at a fixed location (moving relative to the substrate): deposition, contacting, heating, at least partial removal.
|3| The process according to embodiment |1| or |2|, wherein either:
   a. The first precursor is at least partially removed from the substrate between steps c) and d); or
   b. The second precursor is at least partially removed from the substrate between steps d) and e); or
   c. The porous carbon product is at least partially removed from the substrate after step e).

   The steps following the at least partial removal from the substrate can be performed in a continuous process or as a batch process. In one aspect, all of the steps following the partial removal from the substrate are performed in a continuous process. In another aspect, all of the steps following the partial removal from the substrate are performed as a batch process. In another aspect, all at least one of the steps following the partial removal form the substrate is performed in a continuous process and at least one is performed as a batch process.
   In one aspect of this embodiment, option b. is preferred, preferably with step e) being carried out as a batch process.
   In one embodiment, the heating step d) comprises at least one further heating step d^{∗}) between the heating step d) and the step e) of at least partially removing the silicon dioxide, wherein the partial removal of the precursor from the substrate is performed after the heating step d) and before the further heating step d^{∗}). In a preferred aspect of this embodiment, the further heating step d^{∗}) is performed batch wise, preferably in a rotary tube oven. In another aspect of this embodiment, the further heating step d^{∗}) is performed in a continuous manner, preferably by conveying the precursor through a further heating location. In a preferred aspect of this embodiment, a step of reducing the precursor in size is performed after the at least partial removal of the precursor from the substrate and before the further heating step d^{∗}). In one aspect of this embodiment, it is preferred for step e) to be performed as a batch process.
|4| The process according to any of the preceding embodiments, wherein the silicon dioxide layer is deposited in step b) in not more than 20 layers, preferably not more than 10 layers, more preferably not more than 5 layers, more preferably not more than 3 layers, more preferably not more than 2 layers, more preferably not more than 1 layer.
|5| The process according to any of the preceding embodiments, further comprising treatment of the silicon dioxide material prior to contacting step c). The treatment preferably comprises a thermal treatment or a chemical treatment or both. The treatment preferably comprises a thermal treatment.
|6| The process according to any of the preceding embodiments, wherein the deposition of silicon dioxide comprises:
   a. Feeding a feed material composition into a reaction zone at a feeding position;
   b. Reacting the feed material composition in the reaction zone into a first plurality of particles by a chemical reaction;
   c. Depositing the first plurality of particles onto the substrate surface, thereby obtaining the porous silicon dioxide material.

   In one aspect of this embodiment, the feed material composition is liquid or gaseous or both. In one aspect of this embodiment, the feed material is a liquid or gas further comprises a solid, preferably a powder. The solid is preferably silica, more preferably a silica soot.
   In one embodiment of the invention, the deposition of silicon dioxide comprises the steps of
   a. Providing solid silicon dioxide particles;
   b. Heating the solid silicon dioxide particles;
   c. Depositing the silicon dioxide particles onto the substrate, thereby obtaining the porous silicon dioxide material.
|7| The process according to any of the preceding embodiments, wherein the porous silicon dioxide material is contacted with one or a combination of the following:
   a. A liquid phase carbon source;
   b. A gas phase carbon source;
   c. A solid phase carbon source.

   In one aspect of this embodiment, the porous silicon dioxide material is contacted with a carbon source which is a liquid phase comprising solid particles. The particles are preferably suspended or dispersed in the liquid.
   In one embodiment of the invention, the porous silicon dioxide material is contacted with a molten carbon source, namely a carbon source which is solid at ambient temperature and pressure, but which is molten at the contacting temperature. A molten material in this context is preferably a softened solid or a viscous liquid or a liquid. In one aspect of this embodiment, the molten carbon source is coal tar pitch. In one aspect of this embodiment, the molten carbon source is solid at a temperature of 20°C and a pressure of 1 bar. In one aspect of this embodiment, a molten carbon source is one which is a highly viscous fluid at ambient temperature. The carbon sources of this embodiment can not be introduced into a porous material at ambient temperature or at least can not be easily and effectively introduced into a porous material at ambient temperature. Upon heating, the carbon source can be introduced into a porous material due to softening and/or melting. In one aspect of this embodiment, the heat for melting the carbon source is provided as residual heat in the template. This residual heat may be derived from the silicon dioxide deposition step or a step of heating the porous silicon dioxide material or both. In one aspect of this embodiment, the carbon source is molten at a temperature in the range from 280°C to 420°C, preferably in the range from 300°C to 400°C, more preferably in the range from 320°C to 380°C.
   In one embodiment, the silicon dioxide material is contacted with a carbon source dissolved in a solvent. Some solvents of mention in this context are water and organic solvents. In one aspect of this embodiment, the carbon source is a sugar dissolved in water. In another aspect of this embodiment, the carbon source is dissolved in an organic solvent. In one aspect of this embodiment, the solvent is volatile and has an evaporation temperature below the temperature employed in the carbonisation step.
   Embodiments in which the carbon source is not dissolved in a solvent are preferred over those embodiments in which the carbon source is dissolved in a solvent. In particular, embodiments in which a carbon source is dissolved in an organic solvent are less favoured.
|8| The process according to any of the preceding embodiments, comprising contacting the porous silicon dioxide material with a further carbon source, wherein the further carbon source and the first carbon source are different.
|9| The process according to any of the preceding embodiments, wherein the process is a continuous process.
   In one embodiment, part of the process is continuous and part of the process is performed batch wise.
|10| The process according to any of the preceding embodiments, wherein the substrate surface is one or both selected from:
   a. The surface of a belt;
   b. The surface of a rigid body, preferably the surface of a drum.

   In one aspect of this embodiment, the substrate surface is a right circular cylinder.
|11| The process (100) according to any of the preceding embodiments, comprising a step in which one of the following is broken up:
   a. The first precursor;
   b. The second precursor;
   c. The porous carbon product.

   In preferred aspects of this embodiment, the breaking up comprises one or more selected from the group consisting of crushing, grinding, milling, air-blade cutting and electrodynamic fragmentation, preferably crushing. The energy for the breaking up can be provided mechanically or otherwise, for example from an ultrasonic source.
   In a preferred aspect of this embodiment, the item to be broken up has its largest spatial dimension reduced by at least a factor of 10, preferably at least 20, more preferably at least 30.
   In a preferred aspect the largest spatial dimension after the breaking up is in the range from 1 to 50,000 µm, preferably 100 to 10,000 µm, more preferably 1,000 to 5,000 µm.
|12| The process according to any of the preceding embodiments, wherein the porous silicon dioxide material satisfies one or more of the following criteria:
   a) a cumulative pore volume in the range from 0.5 to 5.9 cm³/g, preferably in the range from 0.8 to 5 cm³/g, more preferably in the range from 1 to 4 cm³/g for pores having a diameter in the range from 10 to 10000 nm;
   b) a material density in the range from 2 to 2.3 g/cm³, preferably in the range from 2.05 to 2.25 g/cm³, more preferably in the range from 2.1 to 2.2 g/cm³;
   c) a bulk density in the range from 0.4 to 1.7 g/cm³, preferably in the range from 0.5 to 1.5 g/cm³, more preferably in the range from 0.5 to 1.3 g/cm³, more preferably in the range from 0.5 to 1.0 g/cm³, more preferably in the range from 0.6 to 0.85 g/cm³;
   d) a porosity in the range from 0.2 to 0.9, preferably in the range from 0.3 to 0.8, more preferably in the range from 0.4 to 0.7;
   e) a total specific surface area according to BET-SSA in the range of from 5 to 140 m²/g, preferably in the range from 10 to 130 m²/g, more preferably in the range from 20 to 110 m²/g;
   f) a specific surface area determined by BET-BJH of pores having a pore diameter of less than 2 nm in the range from 0 to 20 m²/g, preferably in the range from 0 to 15 m²/g, more preferably in the range from 0.1 to 10 m²/g;
   g) a pore size distribution determined by mercury intrusion porosimetry in the range from 10 to 10000 nm being characterised by
      i) a D₁₀ in the range from 20 to 100 nm, preferably in the range from 30 to 90 nm, more preferably in the range from 40 to 80 nm,
      ii) a D₅₀ in the range from 150 to 1000 nm, preferably in the range from 200 to 900 nm, more preferably in the range from 300 to 800 nm, and
      iii) a D₉₀ in the range from 2000 to 5000 nm, preferably in the range from 2300 to 4700 nm, more preferably in the range from 2600 to 4300 nm;
   h) a cumulative pore volume in the range from 0.04 to 1.1 cm³/g, preferably in the range from 0.1 to 1.0 cm³/g, more preferably in the range from 0.15 to 0.9 cm³/g, for pores having a pore diameter in the range from 10 to 100 nm;
   i) a cumulative pore volume in the range from 0.02 to 1.3 cm³/g, preferably in the range from 0.05 to 1.1 cm³/g, more preferably in the range from 0.1 to 0.9 cm³/g for pores having a pore diameter of more than 100 nm and up to 1000 nm; and
   j) a cumulative pore volume in the range from 0.01 to 2.0 cm³/g, preferably in the range from 0.05 to 1.8 cm³/g, more preferably in the range from 0.1 to 1.6 cm³/g for pores having a pore diameter of more than 1000 nm and up to 10000 nm
|13| The process according to any of the preceding embodiments, wherein silicon dioxide is deposited at two or more separate locations.

The term monolithic is used in the context of this text in the description of properties of a body which is present as a contiguous whole. A monolithic body is a rigid volume of material in which no sections of the material can move relative to each other. Where a product comprising a collection of detached bodies is described as being or comprising a monolithic body, this refers to an individual body selected from the collection. For example, pore sizes given for a monolithic body refer to pores within an individual body, not to pores formed as voids between separate bodies in the collection.

In one embodiment, the porous carbon product has a laminar geometry, preferably a flake or sheet geometry. A preferred porous carbon products of laminar geometry has a laminar plane, wherein the thickness in a directly perpendicular to the laminar plane is relatively small and the linear extension within the plane is relatively large. In one aspect of this embodiment, the porous carbon product has a first spatial extension which is the maximum linear extension in space, a second spatial extension being the maximum linear extension perpendicular to the first spatial extension and a third spatial extension being perpendicular to both the first spatial extension and the second spatial extension. The ratio of the third spatial extension to the second spatial extension is preferably in the range from 1:5 to 1:100, more preferably in the range from 1:8 to 1:50, more preferably in the range from 1:10 to 1:20. The extension along the third spatial extension is preferably in the range from 10 to 200 µm, preferably in the range from 15 to 100 µm, more preferably in the range from 20 to 50 µm.

In one embodiment, in process step b), one or more of the following is satisfied:
a. the substrate (301) is rotating at a tangential velocity in the range from 0.1 to 10.0 m/min, preferably in the range from 0.5 to 8.0 m/min, more preferably in the range from 1.0 to 6 m/min;
b. the distance from the feeding position to the substrate surface (302) is in the range from 1 to 300 cm, preferably in the range from 5 to 250 cm, more preferably in the range from 10 to 200 cm.

In one embodiment, the process comprises a thermal treatment of the silicon dioxide material satisfies one or more of the following:
a. The maximum temperature in the thermal treatment is higher than the maximum temperature of the substrate surface reached in step b), preferably at least 10°C higher, more preferably at least 20°C higher, more preferably at least 30°C higher;
b. The thermal treatment comprises the steps of:
   i) Increasing the temperature of the porous silicon dioxide material (309) to a temperature in the range from 1000 to 1400°C, or in the range from 1000 to 1100°C, or in the range from 1100 to 1200°C, or in the range from 1200 to 1300°C, or in the range from 1300 to 1400°C;
   ii) Holding the temperature of the porous silicon dioxide material (309) at a temperature in the range from 1000 to 1400°C, or in the range from 1000 to 1100°C, or in the range from 1100 to 1200°C, or in the range from 1200 to 1300°C, or in the range from 1300 to 1400°C, for a duration in the range from 100 to 1000 min, or from 100 to 300 min, or from 300 to 500 min, or from 500 to 600 min, or from 600 to 800 min, or from 800 to 1000 min, and
   iii) Decreasing the temperature of the porous silicon dioxide material (309) below 1000°C, preferably below 900°C, more preferably below 800°C;
c. The temperature of the removed porous silicon dioxide material is increased at a rate in the range from 2 to 10°C/min in the thermal treatment, preferably in the range from 3 to 8°C/min, more preferably in the range from 4 to 7°C/min.

Each of the above criteria could be combined and form one aspect of this embodiment. The following combinations of criteria are preferred aspects of this embodiment: a, b, c, ab, ac, bc, abc. In a preferred aspect of this embodiment, the temperature range in b.i) is the same as the temperature range in b.ii).

In preferred aspects of this embodiment, the following combinations of temperature range and duration are employed in option b.: 1000 to 1400°C for 100 to 1000 min, 1000 to 1400°C for 100 to 300 min, 1000 to 1400°C for 300 to 500 min, 1000 to 1400°C for 500 to 600 min, 1000 to 1400°C for 600 to 800 min, 1000 to 1400°C for 800 to 1000 min, 1000 to 1100°C for 100 to 1000 min, 1000 to 1100°C for 100 to 300 min, 1000 to 1100°C for 300 to 500 min, 1000 to 1100°C for 500 to 600 min, 1000 to 1100°C for 600 to 800 min, 1000 to 1100°C for 800 to 1000 min, 1100 to 1200°C for 100 to 1000 min, 1100 to 1200°C for 100 to 300 min, 1100 to 1200°C for 300 to 500 min, 1100 to 1200°C for 500 to 600 min, 1100 to 1200°C for 600 to 800 min, 1100 to 1200°C for 800 to 1000 min, 1200 to 1300°C for 100 to 1000 min, 1200 to 1300°C for 100 to 300 min, 1200 to 1300°C for 300 to 500 min, 1200 to 1300°C for 500 to 600 min, 1200 to 1300°C for 600 to 800 min, 1200 to 1300°C for 800 to 1000 min, 1300 to 1400°C for 100 to 1000 min, 1300 to 1400°C for 100 to 300 min, 1300 to 1400°C for 300 to 500 min, 1300 to 1400°C for 500 to 600 min, 1300 to 1400°C for 600 to 800 min, 1300 to 1400°C for 800 to 1000 min.

Further preferred combinations are selected from the following: 1000 to 1100°C for 800 to 1000 min, 1100 to 1200°C for 600 to 800 min, 1100 to 1200°C for 400 to 600 min, 1200 to 1300°C for 400 to 600 min, 1200 to 1300°C for 600 to 800 min, 1300 to 1400°C for 800 to 1000 min.

In one aspect of this embodiment, the cooling in step iii) is performed by passive cooling only, preferably by standing at ambient temperature.

In one embodiment, the process comprises a modification of the pore structure of the porous silicon dioxide material comprising one or more of the following:
a. a reduction of the width of the pore size distribution of the porous silicon dioxide material (309),
b. a reduction of the porosity of the porous silicon dioxide material (309) or a reduction of the total pore volume of the porous silicon dioxide material (309) or both,
c. a reduction of the number of modes of a multi-modal pore size distribution of the porous silicon dioxide material (309) by at least one mode.

Each of the above criteria could be combined and form one aspect of this embodiment. The following combinations of criteria are preferred aspects of this embodiment: a, b, c, ab, ac, bc, abc. In a further embodiment, the process comprises a modification of pore structure comprising modifying a peak in the pore size distribution either by making the peak narrower, or by changing the peak value, or both. In one aspect of this embodiment, a peak is simultaneously narrowed and its peak value moved.

In one embodiment, the thickness of the deposited silicon dioxide material (309) is in the range from 10 to 500 µm. In a further embodiment, the silicon dioxide is deposited in one or more layers, wherein one or more, preferably all of the layers each has/have a thickness in the range from 5 to 20 µm, preferably in the range from 7 to 18 µm, more preferably in the range from 10 to 15 µm. In some cases, a layer may have a thickness of up to around 200 µm.

In one embodiment, in process step b), the chemical reaction is a pyrolysis or a hydrolysis or both.

Preferably, in the process according to embodiment |6|, the feed material composition is fed into the reaction zone at a feeding rate in kg/min. The feeding rate is preferably selected by the skilled person in line with the dimensions of the instrumental setup. Further preferably, in process step c) a fraction of 0.5 to 0.95, preferably 0.6 to 0.9, more preferably 0.7 to 0.85, of the first plurality of particles is deposited onto the substrate surface, thereby obtaining the porous silicon dioxide material.

Preferably, in process step b) the porous silicon dioxide material is obtained at a deposition rate in kg/min, wherein the ratio of deposition rate and feeding rate is in the range from 0.02 to 0.2, preferably from 0.1 to 0.2, more preferably from 0.17 to 0.19.

In the following, the term "template" is used to refer to a porous silicon dioxide material, in particular at the point where it is impregnated with a carbon source.

### Chemical reaction of the feed material composition / starting materials

The reaction zone is preferably formed from a flame or flames of at least one reaction burner, preferably at least 2 reaction burners, more preferably at least 3 reaction burners, more preferably at least 5 reactions burners, most preferably at least 10 reaction burners which are preferably pointed towards the substrate surface. Preferably, the reaction zone is formed from multiple reaction burners which are arranged in at least one row, preferably at least 2 rows, more preferably at least 3 rows. Therein, the reaction burners of different rows are preferably arranged offset to each other. In another preferred embodiment the reaction zone is formed from at least one linear burner, preferably from at least 2 linear burners, more preferably from at least 3 linear burners. Therein, each linear burner provides multiple flames in a row. A preferred reaction burner moves back and forth, preferably keeping a constant distance to the substrate surface. Preferably, multiple reaction burners are arranged on a single burner feed, wherein the burner feed moves forth and back.

In one embodiment in which more than one layer of silicon dioxide is deposited on the substrate surface, silicon dioxide is deposited on the substrate surface at more than one position, preferably by two or more rows of burners. In a particular aspect of this embodiment, silicon dioxide is deposited at two ore more locations, wherein a single layer is deposited at each location.

The process for preparation of the template preferably comprises one or more pyrolysis and/or hydrolysis steps in order to obtain intermediate particles or so called primary particles. These primary particles, or so called secondary particles formed by agglomeration thereof should be suited to deposition on the substrate surface. The first plurality of particles can be the primary particles or the secondary particles or a mixture of both.

It is preferred for pyrolysis and/or hydrolysis to be carried out at increased temperature, preferably at a temperature adapted to break chemical bonds in the starting materials. In one embodiment, pyrolysis and/or hydrolysis is carried out at a temperature greater than about 250°C, preferably greater than about 300°C, more preferably greater than about 400°C, further more preferably greater than about 600°C, most preferably greater than about 700°C. Usually the pyrolysis and/or hydrolysis is carried out up to the adiabatic flame temperature. This temperature depends on the feed material composition and is usually less 3100°C.

The starting materials, synonymously referred to as the feed material composition, are preferably in a liquid phase or in a gas phase or both. It is preferred for the feed material composition to comprise one or more silicon sources, which preferably is/are suitable for providing a silicon comprising primary particles. Preferred silicon comprising primary particles are one or more selected from the group consisting of: neutral primary particles or charged primary particles, preferably neutral primary particles. Preferred neutral primary particles in this context are one or more selected from the group consisting of: a silicon atom and a silicon oxide, preferably a silicon oxide, more preferably SiO₂. Preferred silicon sources are organic or inorganic. Preferred inorganic silicon sources are one or more selected from the group consisting of: a siloxane, a silicon halide, a silane and silicic acid. Preferred organic silicon sources are one or more selected from the group consisting of: an organic silane, preferably an alkyl silane; a silanol; a siloxide; a siloxane; a silyl ether; a silanylidene; a silene and a silole; preferably selected from the group consisting of: an alkyl silane, a silyl ether and a silyl ester; more preferably an alkyl silane.

Preferred siloxanes in this context are one or more selected from the group consisting of: a linear siloxane and a cyclic siloxane. Preferred linear siloxanes in this context are one or more selected from the group consisting of silicone or a derivative thereof, disiloxane, hexamethyldisiloxane, polydimethylsiloxane, polymethylhydrosilox-ane, and polysilicone-15. Preferred cyclic siloxanes in this context are one or more selected from the group consisting of: octamethylcyclotetrasiloxane, decamethylcyclopentasiloxane, and dodecamethylcyclohexasiloxane, preferably octamethylcyclotetrasiloxane.

Preferred silicon halides in this context are one or more selected from the group consisting of: SiF₄, SiCl₄, and SiBr₄; preferably one ore more selected from the group consisting of: SiCl₄ and SiBr₄; more preferably SiCl₄. In one embodiment the feed material comprises a higher order silicon halide, preferably of the general form SiₙX₂ₙ₊₂, wherein n is an integer greater than 1, preferably in the range from 2 to 20, more preferably in the range from 3 to 15, most preferably in the range from 4 to 10, and wherein X is a halide, preferably one or more selected from F, Cl and Br, more preferably one or more selected from Cl and Br; most preferably Cl. Preferred higher order silicon halides in this context are one or more selected from the group consisting of: Si₂Cl₆, Si₃Cl₈, Si₄Cl₁₀, Si₅Cl₁₂, Si₆Cl₁₄, Si₇Cl₁₆ and Si₈Cl₁₈, preferably Si₂Cl₆. Preferred alkyl silicon halides have one or more halogen atoms replaced with an alkyl group, preferably selected from the group consisting of: methyl, ethyl, propyl, butyl and pentyl, preferably one or more selected form the group consisting of: methyl and ethyl, more preferably methyl. Preferred alkyl silanes in this context are one or more compounds with the general formula SiHₓR₄₋ₓ, wherein x is a number in the range from 0 to 3; and R is an alkyl group and the R in the molecule may be the same as or different to each other. Preferred alkyl groups R in this context are one or more selected from the group consisting of: methyl, ethyl, propyl, butyl and pentyl; preferably one or more selected from the group consisting of: methyl and ethyl; more preferably methyl. Preferred alkyl silanes in this context are one or more selected from the group consisting of: Si(CH₃)₄, SiH(CH₃)₃, SiH₂(CH3)₂, SiH₃(CH₃), Si(C₂H₅)₄, SiH(C₂H₅)₃, SiH₂(C₂H₅)₂, SiH₃(C₂H₅), Si(C₃H₇)₄, SiH(C₃H₇)₃, SiH₂(C₃H₇)₂, SiH₃(C₃H₇), Si(C₄H₉)₄, SiH(C₄H₉)₃, SiH₂(C₄H₉)₂, SiH₃(C₄H₉); preferably selected from the group consisting of: Si(CH₃)₄, Si(C₂H₅)₄, Si(C₃H₇)₄ and Si(C₄H₉)₄. In one embodiment, the feed material comprises a higher order alkyl silane, preferably with the formula SiₙH_{y}R_{z}, wherein n is a an integer greater than 1, preferably in the range from 2 to 20, more preferably in the range from 3 to 15, most preferably in the range from 4 to 10, wherein y and z sum to 2^{∗}n+2 and wherein z is one or more.

Preferred silyl ethers are one or more compounds with the general formula SiHₓR_{y}(OR)_{z}, wherein x and y are numbers in the range from 0 to 3; z is a number in the range from 1 to 4; x, y and z sum to 4; and R is an alkyl group, wherein the R in the molecule may be the same as or different to each other. Preferred alkyl groups R in this context are one or more selected from the group consisting of: methyl, ethyl, propyl, butyl and pentyl; preferably one or more selected from the group consisting of: methyl and ethyl; more preferably methyl. Preferred silyl ethers in this context are one or more selected from the group consisting of: Si(OCH₃)₄, SiH(OCH₃)₃, SiH₂(OCH₃)₂, SiH₃(OCH₃), Si(OC₂H₅)₄, SiH(OC₂H₅)₃, SiH₂(OC₂H₅)₂, SiH₃(OC₂H₅), Si(OC₃H₇)₄, SiH(OC₃H₇)₃, SiH₂(OC₃H₇)₂, SiH₃(OC₃H₇), Si(OC₄H₉)₄, SiH(OC₄H₉)₃, SiH₂(OC₄H₉)₂, SiH₃(OC₄H₉), Si(OCH₃)₄, Si(CH₃)(OCH₃)₃, Si(CH₃)₂(OCH₃)₂, Si(CH3)₃(OCH₃), Si(OC₂H₅)₄, Si(CH₃)(OC₂H₅)₃, Si(CH₃)₂(OC₂H₅)₂, Si(CH₃)₃(OC₂H₅), Si(OC₃H₇)₄, Si(CH₃)(OC₃H₇)₃, Si(CH₃)₂(OC₃H₇)₂, Si(CH₃)₃(OC₃H₇), Si(OC₄H₉)₄, Si(CH₃)(OC₄H₉)₃, Si(CH₃)₂(OC₄H₉)₂, Si(CH₃)₃(OC₄H₉); preferably selected from the group consisting of SiH₃(OCH₃)₃, SiH₂(OCH₃)₂, SiH(OCH₃)₃, Si(OCH₃)₄, Si(CH₃)₃(OCH₃)₃, Si(CH₃)₂(OCH₃)₂, Si(CH₃)(OCH₃)₃; preferably Si(CH₃)₂(OCH₃)₂ or SiH₂(OCH₃)₂. In one embodiment, the feed material comprises a higher order silyl ether, preferably with the formula SiₙHₓR_{y}(OR)_{z}, wherein n is a an integer greater than 1, preferably in the range from 2 to 20, more preferably in the range from 3 to 15, most preferably in the range from 4 to 10, z is one or more, and wherein x, y and z sum to 2^{∗}n+2.

In one embodiment of the invention, the starting materials comprise a silicon source with the general chemical formula:

SiᵥH_{w}XₓR_{y}OH_{z}

Wherein v, w, x, y and z are positive integers;
v is a positive integer, preferably in the range from 1 to 20, more preferably in the range from 1 to 15, further more preferably in the range from 1 to 10, most preferably 1;
w, x, y & z sum to 2^{∗}x+2;
R is an organic moiety, preferably selected from the group consisting of: alkyl, alkenyl, ester and alkoxy; preferably alkyl or alkoxy; wherein the R in the molecule can be the same as or different to each other;
X is a halogen; preferably F, Cl, Br or I; more preferably Cl, Br or I; most preferably Cl; wherein the X in the molecule can be the same as or different to each other.

In one embodiment, the starting materials comprise a fuel for providing energy for pyrolysis and/or hydrolysis. Preferred fuels are one or more selected from the group consisting of: hydrogen and an organic compound; preferably hydrogen. Preferred organic compounds in this context are one or more selected from the group consisting of: an alkane, an alkene, an alkyne, a ketone, an aldehyde and an ester; preferably an alkane or an alkene; more preferably an alkane. Preferred alkanes in this context are one or more selected from the group consisting of: methane, ethane, propane, butane and pentane; preferably methane. Preferred alkenes in this context are one or more selected from the group consisting of: ethene, propene, butene and pentene. A preferred alkyne is ethyne, also referred to as acetylene.

It is preferred for the starting materials to comprise oxygen, both in order to liberate energy from the fuel and to allow formation of SiO₂ species. The relative amounts of the starting materials, the pressure of the starting materials and the temperature of the pyrolysis and/or hydrolysis can be selected by the skilled person in order to facilitate the advantageous properties of the invention.

### Deposition process

In process step b) of the process according to the invention silicon dioxide is deposited onto the substrate surface. Preferably, a first plurality of particles is obtained by reacting a feed composition and depositing the first plurality of particles onto the substrate surface. The particles of the first plurality of particles are obtained from the above described chemical reaction in the reaction zone. Preferably, the first plurality of particles is a plurality of inorganic particles. Preferred inorganic particles are silicon oxide particles. A preferred silicon oxide is SiO₂. Throughout this document, the first plurality of particles is also referred to as soot or soot particles. Therein, the term soot relates to fine particles which are obtained from hydrolysis or pyrolysis or both. However, the term soot does not necessarily refer to carbon particles. Instead, preferred soot particles are silicon oxide particles.

Preferably, the primary particles are obtained via a nucleation and subsequent growth process from a gaseous phase in the reaction zone. Preferably, the primary particles are characterised by an average particle size in the range from 5 to 500 nm, preferably from 20 to 400 nm, more preferably from 50 to 250 nm.

In order to be deposited on the substrate surface, the primary particles have to cover a distance across the reaction zone from the position at which the primary particles are produced to the substrate surface. On their way to the substrate surface the primary particles interact with the reaction zone. Due to this and depending on the degree of interaction, the primary particles preferably agglomerate to form secondary particles. Therein, the secondary particles as agglomerates of the primary particles comprise different numbers of primary particles. Hence, the secondary particles are characterised by a rather broad particle size distribution comprising particle sizes in a range from about 5 to about 5000 nm. The secondary particles are porous. Therein, the secondary particles comprise meso-pores between the agglomerated primary particles. The meso-pores are characterised by an average pore size in the range from 2 to 100 nm, preferably from 10 to 80 nm, more preferably from 30 to 70 nm.

Moreover, preferred secondary particles are characterised by a specific surface area according to BET-SSA in the range from 5 to 140 m²/g, preferably from 6 to 30 m²/g, more preferably from 7 to 15 m²/g.

The secondary particles are deposited on the substrate surface. Therein, the substrate surface is preferably one selected from the group consisting of a surface of a container, a surface of a dome, a lateral surface of a geometric body, a surface of a plate and a surface of a filter, or a combination of at least two thereof. A preferred surface of a container is an interior surface or an exterior surface or both of the container. A preferred geometric body is a prism. A preferred prism is a cylinder.

Preferably, the porous silicon dioxide material is formed on the substrate surface to a total thickness of the porous silicon dioxide material in the range from 10 to 500 µm, preferably from 20 to 100 µm, more preferably from 20 to 50 µm.

A temperature of the substrate surface is preferably controlled. Controlling the temperature of the substrate surface includes one selected from the group consisting of measuring the temperature of the substrate surface, heating the substrate surface, and cooling the substrate surface, or a combination of at least two thereof. Preferably, controlling the temperature of the substrate surface prevents the porous silicon dioxide material from being sintered throughout its total volume. In order to partially sinter the first plurality of particles on the substrate surface the first plurality of particles is preferably heated by the reaction burners. However, in a preferred embodiment the first plurality of particles on the substrate surface is heated by an additional heating. A preferred additional heating comprises at least one further burner. Another preferred additional heating is arranged on a backside of the substrate surface. Preferably, the substrate is a hollow body, preferably a hollow cylinder, which comprises the additional heating. Another preferred additional heating is an infrared emitter. Preferably, the substrate has a temperature in the range from 500 to 1200°C, more preferably from 500 to 750°C, most preferably from 550 to 650°C. The technical features provided in the above paragraph are particularly preferred in the context of an embodiment according to which the particles of the first plurality of particles form exactly 1 layer of the porous silicon dioxide material on the substrate surface.

Preferably, a surface of the porous silicon dioxide material on the substrate surface has a temperature in the range from 800 to 1500°C, preferably from 900 to 1400°C, more preferably from 1000 to 1300°C, wherein the surface of the porous silicon dioxide material faces the reaction zone.

The porous silicon dioxide material which is formed on the substrate surface comprises the particles of the first plurality of particles in form of agglomerates. Therein, the agglomerates comprise the above described meso-pores. Between the agglomerates the porous silicon dioxide material comprises macro-pores. The macro-pores are preferably characterised by an average pore size in the range from 0.1 to 1.0 µm, preferably from 0.2 to 0.9 µm, more preferably from 0.4 to 0.6 µm.

In one embodiment of the invention, the silicon dioxide is deposited by providing silicon dioxide particles, heating them and depositing them on the substrate. The deposition may also comprises deposition of both heated silicon dioxide particles and silicon dioxide particles produced by reacting a feed stuff. Silicon dioxide particles for heating and deposition are preferably in the form of particles, preferably a silica soot. The silicon dioxide particles for heating a deposition are preferably provided as the by product of another process.

Preferably, the porous silicon dioxide material has a relative density in the range from 10 to 40 %, preferably from 20 to 35 % and more preferably from 22 to 30 %, of the material density of the porous silicon dioxide material. The porous silicon dioxide material having the aforementioned relative density is particularly preferred in the context of an embodiment according to which the particles of the first plurality of particles form exactly 1 layer of the porous silicon dioxide material on the substrate surface.

Therein, the material density is the density of the porous silicon dioxide material excluding the pores. The relative density of the porous silicon dioxide material is preferably adjusted by means of one selected from the group consisting of the temperature of the substrate surface, a temperature of the porous silicon dioxide material during an additional heat treatment on the substrate surface, and a mechanical pressure which acts on the porous silicon dioxide material on the substrate surface, or by a combination of at least two thereof. The porous silicon dioxide material comprising meso-pores and different levels of macro-pores is also referred to as having a hierarchic porosity or a hierarchic pore size distribution or both. Therein, the macro-pores preferably provide an open porosity to the porous silicon dioxide material. Hence, the macro-pores preferably provide a system of interconnected channels throughout the porous silicon dioxide material. A preferred porous silicon dioxide material obtained in process step b) according to the invention is characterised by a multimodal pore size distribution. A preferred multimodal pore size distribution comprises 2 to 10 modes, preferably 2 to 8 modes, more preferably 2 to 6 modes, most preferably 2 to 4 modes.

In a particularly preferred embodiment the porous silicon dioxide material is obtained on the substrate surface in form of exactly one layer superimposing the substrate surface. A layer of the porous silicon dioxide material, preferably each layer of the porous silicon dioxide material, is preferably characterised by a layer thickness in the range from 10 to 500 ¡tm, preferably from 20 to 100 ¡tm, more preferably from 20 to 50 µm. A preferred layer of the porous silicon dioxide material has a bulk density in the range from 0.3 to 1.25 g/cm³, preferably from 0.4 to 1.2 g/cm³, more preferably from 0.5 to 1.1 g/cm³, and most preferably from 0.5 to 0.7 g/cm³. Therein, the bulk density is the density of the porous silicon dioxide material including the material of the porous silicon dioxide material and the pores. In a further preferred embodiment a layer of the porous silicon dioxide material, preferably each layer of the porous silicon dioxide material, is characterised by a layer thickness in the range from 1 to 10 ¡tm, more preferably from 3 to 5 µm.

After impregnation of the template with the carbon source, and optionally after carbonisation of the carbon source, the resultant material is at least partially removed from the substrate surface. Preferably, the material is removed from substrate surface by means of a gas stream. Therein, the gas stream is preferably directed onto a backside of the material, wherein the backside faces the substrate surface. A preferred gas stream is an air stream. Such an air stream is also known as air knife or air blade. According to another preferred embodiment the material is removed from substrate surface by means of a solid blade or a solid edge. A preferred solid blade/edge is made from a metal or from a ceramic or from both. Therein, a preferred metal is stainless steel.

In certain embodiments, it is preferred for a porous material to be reduced in size. The porous material for reduction in size can be one or more selected from the group consisting of: the template impregnated with carbon source, the template comprising carbonised carbon, or the porous carbon product. A reduction provides a second plurality of particles. Preferably, the porous material is reduced in size in a size reduction zone, wherein the size reduction zone is at least partially spatially separated from the substrate surface. Preferably, the size reduction zone is at least partially separated from the substrate surface by a shielding between the size reduction zone and the substrate surface. Preferably, spatially separating the size reduction zone from the substrate surface mitigates contamination of the reaction zone with dust from the size reduction zone. Preferably, the porous material is reduced in size by one selected from the group consisting of cutting, breaking and crushing or a combination of at least two thereof. Preferably, the porous material is reduced in size in a size reduction device, wherein the size reduction device preferably comprises at least two rotating rollers between which the porous material is fed. Preferably, the rollers comprise profiled surfaces. Preferably, the size reduction device is designed such that the second plurality of particles obtained by reducing the size of the porous silicon dioxide material in the size reduction device is characterised by an as narrow as possible particle size distribution.

Preferably, in the case of a porous silicon dioxide material or porous silicon dioxide material, the particles of the second plurality of particles are characterised by a particle size which is larger than the particle size of the particles of the first plurality of particles, preferably than the particle size of the secondary particles. Preferably, the particles of the second plurality of particles are non-spherical. Preferred non-spherical particles are rods or flakes or both. Preferably, a thickness of the particles of the second plurality of particles is equal or less than a thickness of the porous silicon dioxide material on the substrate surface. Moreover, preferred particles of the second plurality of particles are characterised by a dimension ratio of at least 5, preferably of at least 10. Preferred particles of the second plurality of particles are characterised by a thickness in the range from 10 to 500 µm, preferably from 20 to 100 µm, more preferably from 20 to 50 µm. Preferably, the particles of the second plurality of particles are characterised by an as high as possible surface to volume ratio. Preferably, the particles of the second plurality of particles comprise cut surfaces or fracture surfaces or both which show open pores.

Preferably, at least the process steps b) and c) of the process according to the invention are performed continuously, preferably at least b), c) and d). Therein, a preferred substrate surface is revolving. A preferred revolving substrate surface is a surface of a rotating body or a surface of a conveyor belt or both. A preferred rotating body is prismatically shaped. Preferably, the prismatically shaped substrate rotates about its longitudinal axis. Therein, the substrate surface is preferably a lateral surface of the prismatically shaped substrate. A preferred prismatically shaped substrate is cylindrically shaped. The substrate surface is preferably made from a material which allows easy removal of the porous silicon dioxide material from the substrate surface. Preferably, the material of the substrate surface does not join the porous silicon dioxide material at a temperature which the porous silicon dioxide material experiences on the substrate surface. A preferred substrate comprises an inner part which is made of an inner material and an outer part which is made of an outer material. Therein, the substrate surface is a surface of the outer part. A preferred inner material is a metal. A preferred metal is steel. A preferred steel is a stainless steel. A preferred outer material is a ceramic. A preferred ceramic outer material is silicon carbide. In a particularly preferred embodiment the substrate is a rotating cylinder. The cylinder rotates about its longitudinal axis. Therein, the substrate surface is a lateral surface of the rotating cylinder. A preferred rotating cylinder is a hollow cylinder.

In a preferred embodiment of the invention, the breaking up step yields non-spherical particles. In one aspect of this embodiment, the non-spherical particles are flakes or rods or both. Preferred non-spherical particles are characterised by a dimension ratio of at least 5, preferably of at least 10. Preferred non-spherical particles are characterised by a thickness in the range from 10 to 500 µm, preferably from 20 to 100 µm, more preferably from 20 to 50 µm.

In a preferred embodiment 10 of the process 1 according to the invention the process is designed according to any of its preceding embodiments, wherein the silicon dioxide material is thermally treated, preferably before impregnation with the carbon source. A preferred thermally treating is a sintering.

In a preferred embodiment of the invention, in process step b) the substrate is rotating at a tangential velocity in the range from 0.1 to 10.0 m/min, preferably from 0.5 to 9.5 m/min, more preferably from 1.0 to 8.5 m/min, most preferably from 2.0 to 7.0 m/min. A preferred substrate surface is a lateral surface of a cylinder. Therefor, a preferred substrate is cylindrical. In another preferred embodiment in process step b) the tangential velocity of the substrate is adjusted in order to obtain the porous silicon dioxide material in the form of more than one layer on the substrate surface, wherein the layers are characterised by a constant thickness. Therefor preferably, the tangential velocity of the substrate is decreased, preferably within the range from 0.1 to 10.0 m/min, more preferably from 0.5 to 9.5 m/min, more preferably from 1.0 to 8.5 m/min, most preferably from 2.0 to 7.0 m/min, in process step b).

In a preferred embodiment of the invention, the distance from the feeding position to the substrate surface is in the range from 1 to 300 cm, preferably from 5 to 250 cm, more preferably from 10 to 200 cm, more preferably from 10 to 150, most preferably from 30 to 100 cm.

In a preferred embodiment of the invention, the substrate is a hollow body enclosing an inner volume.

In a preferred embodiment of the invention, in process step b), the temperature of the substrate is controlled from within the inner volume. A preferred controlling of the temperature of the substrate is a heating or a cooling or both. Preferably the substrate is cooled in order to facilitate the removal of the material from the substrate surface. A preferred cooling of the substrate is a cooling by an air stream.

In a preferred embodiment of the invention, the substrate is characterised by a first coefficient of linear thermal expansion, wherein the porous silicon dioxide material is characterised by a further coefficient of linear thermal expansion, wherein an absolute value of a difference of the first coefficient of linear thermal expansion and the further coefficient of linear thermal expansion is in the range from 1.90·10⁻⁵ to 2.00·10⁻⁵ 1/K, preferably from 1.93·10⁻⁵ to 1.97·10⁻⁵ 1/K, more preferably from 1.94·10⁻⁵ to 1.96·10⁻⁵ 1/K. Preferably, the first coefficient of linear thermal expansion is more than the further coefficient of linear thermal expansion.

In a preferred embodiment of the invention, at least partial removal of the material from the substrate surface comprises contacting the material with a gas stream or an edge or both. Preferably, the material is removed from the substrate surface using an air knife or an air blade or both. A preferred edge is one selected from the group consisting of an edge of a knife, a blade, and a scraper, or a combination of at least two thereof, which are preferably made of a metal or a ceramic or both. A preferred metal is stainless steel.

### Activation of template

Optionally, the template may be treated, in particular prior to impregnation with the carbon source, in order to introduce chemical functionality onto the surface of the template. Preferably, the adapted porous silicon dioxide material is treated in such a manner.

In one embodiment, the template is treated with a silane in order the increase the hydrophobic nature of its surface. Preferred silanes in this context are compounds with the general formula
SiHₓR₄₋ₓ, wherein x is an integer in the range from 0 to 4; and R is an alkyl group and the R in the molecule may be the same as or different to each other. Preferred alkyl groups R in this context are one or more selected from the group consisting of: methyl, ethyl, propyl, butyl and pentyl; preferably one ore more selected from the group consisting of: methyl and ethyl; more preferably methyl.

In another embodiment, the template is treated with one or more selected from the group consisting of: a siloxane, a silazane, and any other organic material.

### Carbon source

The carbon source is suitable for contacting, preferably impregnating, the template and forming a carbon body on carbonisation. Preferred carbon sources comprise carbon, further elements which are at least partially removed on carbonisation and optionally further elements which at least partially remain in the carbon body on carbonisation as hetero-centres.

In one embodiment the carbon source comprises one or more aromatic systems comprising carbon sources. Preferred aromatic systems contribute to the formation of carbon sheets in the porous carbon product obtained in process step h). Preferred aromatic systems comprise one or more aromatic rings and/or one or more double aromatic rings and/or one or more triple aromatic rings and/or one or more structural units formed of four or more aromatic rings. Preferred aromatic systems are selected from the group consisting of a pitch and naphthol, or a combination of at least two thereof. A preferred pitch is petroleum pitch or a mesophase pitch or both. A preferred phenolic resin is a phenolic plastic. In one aspect of this embodiment, the aromatic system is a liquid, a solid or present in solution. Preferred solvents in this context are chloroform and/or THF.

In one embodiment the carbon source comprises one or more non-aromatic carbon sources. Preferred non-aromatic carbon sources are sugars, preferably one or more selected from the group consisting of: saccharose, glucose and fructose. In one aspect of this embodiment, the non-aromatic carbon source is a liquid, a solid or present in solution. The preferred solvent in this context is water.

In one embodiment, the carbon source comprises one or more aromatic systems and one or more non-aromatic carbon sources.

In a preferred embodiment, the carbon source is a plurality of carbon source particles. A preferred plurality of carbon source particles is characterised by a particle size distribution having one selected from the group consisting of a D₅ in the range from 0.5 to 12, preferably from 1 to 12 ¡tm, more preferably from 2 to 9 ¡tm, more preferably from 2.5 to 5 µm; a D₅₀ in the range from 2 to 30 ¡tm, preferably from 11 to 25 ¡tm, more preferably from 12 to 20 ¡tm, more preferably from 12 to 17 µm; and a D₉₅ in the range from 5 to 80 µm, preferably from 50 to 80 ¡tm, more preferably from 55 to 75 ¡tm, more preferably from 57 to 70 µm; or a combination of at least two thereof. Another preferred plurality of carbon source particles is characterised by a particle size distribution having one selected from the group consisting of a D₅ in the range from 0.5 to 12, preferably from 0.5 to 10 ¡tm, more preferably from 0.5 to 6 ¡tm, more preferably from 1 to 4 µm; a D₅₀ in the range from 2 to 30 ¡tm, preferably from 2 to 20 µm, more preferably from 2 to 12 ¡tm, more preferably from 3 to 8 µm; and a D₉₅ in the range from 5 to 80 ¡tm, preferably from 5 to 25 ¡tm, more preferably from 5 to 20 ¡tm, more preferably from 8 to 15 µm; or a combination of at least two thereof.

### Contacting / impregnation

The carbon source is contacted with the template, preferably the porous silicon dioxide material, in order to at least partially occupy the pores of the template, preferably by means of fluid flow. This step is also referred to as impregnation.

In embodiments of the invention, it is preferred for the carbon source to be introduced into at least part of the unoccupied volume of the template by fluid flow of a carbon source, preferably in the form of a liquid, a solution or a melt.

In one embodiment, the carbon source is introduced into the template as a melt. The carbon source is preferably mixed with the template in the form of particles and heated to melt the carbon source. The temperature of heating should be determined by the melting point of the carbon source.

The impregnation preferably comprises one or more steps selected form the group consisting of: dipping, spinning and pumping.

In one embodiment, two or more, preferably three or more, more preferably four or more impregnations steps are carried out, preferably interspersed by one or more carbonisation steps.

### Carbonisation

The carbon source is at least partially carbonised.

By carbonising the carbon source one selected from the group consisting of graphitic carbon, graphite-like carbon and non-graphitic carbon, or a combination of at least two thereof is obtained. Therein, a preferred non-graphitic carbon is turbostratic carbon. Non-graphitic carbon is a modification of carbon which is different from graphite.

In a preferred embodiment of the process according to the invention the carbonising comprises obtaining a non-graphitic carbon from the carbon source, wherein in a subsequent process step graphite is obtained from the non-graphitic carbon by graphitisation.

During contacting the template with the carbon source, the carbon source preferably has a temperature Tₐ. Preferably, Tₐ is in the range from 10 to 500°C, more preferably from 15 to 400°C, most preferably from 100 to 370°C.

The carbonising preferably comprises heating the carbon source to a temperature T_{c}, wherein T_{c}>Tₐ. Preferably, T_{c} is higher than 400°C, preferably higher than 450°C, most preferably higher than 500°C.

The above given temperatures Tₐ and T_{c} can be fixed temperature values or suitable temperature ranges. For example, T_{c} can be a fixed temperature which is preferably higher than 300°C. However, T_{c} can also be a temperature range, wherein the temperatures of said temperature range are preferably each higher than 300°C. Therein, the temperatures of the temperatures range T_{c} have to be suitable for carbonising the carbon source. Holding the temperatures of the carbon source and/or the carbon obtained from the carbon source at T_{c} can mean keeping said temperature constant at a specific value T_{c} or holding the temperature in a temperature range T_{c}. This applies analogously to Tₐ. Therein, Tₐ is a specific temperature or a temperature range which is suitable for contacting the carbon source with the template.

### Removing the adapted template / etching

The template is at least partially, preferably substantially, removed, preferably by etching, from a solid body (precursor) comprising both the template and the carbon, obtained from carbonisation, to obtain the porous carbon product.

In one embodiment at least about 50 wt.-%, preferably at least about 80 wt.-%, more preferably at least about 95-wt.-%, most preferably at least about 99 wt.-% of the template material, based on the total weight of template material in the solid body comprising template and carbon, is removed in the etching step.

Etching preferably comprises a step of chemical dissolution preferably with an acid or a base. A preferred acid is a Bronsted acid, preferably an inorganic Bronsted acid. A preferred base is a Bronsted base, preferably an inorganic Bronsted base. A preferred inorganic Bronsted acid is HF. A preferred inorganic Bronsted base is NaOH.

Following etching, the porous carbon product obtained is preferably rinsed and preferably dried. Rinsing is preferably with water.

### Graphitisation

The process of the invention optionally comprises one or more graphitisation steps which preferably causes structural changes to the porous carbon product, preferably in the surface of the porous carbon body. Graphitisation is preferably performed after removal of the template.

Preferred temperatures for the graphitisation step are in the range from about 500 to about 3000°C, more preferably in the range from about 1000 to about 2500°C, most preferably in the range from about 1300 to about 2300°C. Where a graphitisable carbon source is present, graphitisation preferably increases the content of graphite like 2D sheets in the porous carbon body. Where a non-graphitisable carbon source is present, graphitisation preferably converts some micropores on the surface of the porous carbon product to turbostratic carbon.

### Activation of the porous carbon product

In one embodiment, the porous carbon product is chemically activated. In one embodiment, the porous carbon product is heated in the presence of oxygen, preferably at a temperature in the range from about 200 to about 700°C, more preferably in the range from about 300 to about 600°C, most preferably in the range from about 400 to about 500°C, in order to bring about oxidisation of the carbon surface, preferably selective oxidisation of non-graphitic carbon sites.

### Sizing

For the use throughout this document sizing means any means of determining a size of a precursor or product. The size can be determined by reducing in size or by classifying or both. An example for reducing in size is milling. An example for classifying is sieving. The process according to the invention can comprise several sizing steps.

In a preferred embodiment of the process according to the invention a precursor comprising the template and the carbon obtained from carbonising the carbon source is reduced in size in a first reducing in size step. Therein, the precursor is preferably reduced in size by milling. The milling is preferably performed in one selected from the group consisting of an impact mill, a jet mill, a ball mill, and a roller mill, or a combination of at least two thereof. By reducing in size the above mentioned precursor preferably a plurality of precursor particles is obtained.

In another preferred embodiment according to the invention the first reducing in size step is performed in a fluidised bed or in a mixer or both. Therein, a preferred mixer is a paddle mixer.

The porous carbon product of the invention is preferably reduced in size in a second reducing in size step. The second reducing in size step is preferably performed after drying the porous carbon product, or prior to drying the porous carbon product, or both.

If the second reducing in size step is performed prior to drying the fourth reducing in size step preferably comprises wet-milling the porous carbon product. A preferred wet-milling is performed in a ball mill. In a preferred embodiment after wet-milling the porous carbon product is classified in a wet state. A preferred classifying in a wet state is a centrifuging or a decanting or both. In another preferred embodiment the porous carbon product is dried after wet-milling and prior to classifying.

If the second reducing in size step is performed after drying the second reducing in size step is preferably performed using a jet mill or a roller mill or both. A preferred jet mill is an air jet mill. A preferred jet mill comprises a compressed gas, wherein the compressed gas is characterised by a pressure in the range from below 10 bar, preferably below 5 bar, more preferably below 3 bar. Preferably the jet mill comprises at least two opposed jets. Another preferred jet mill comprises a classifying rotor.

Classifying the dried porous carbon product is preferably performed using a sieve or a classifying rotor or both. Most preferred is a classifying rotor. A preferred classifying rotor is a sifter. By sifting, the dried porous carbon product can preferably be classified in shorter times or with less damages to the porous carbon product or both. For sieving the porous carbon product a sieve which does not comprise an ultrasonic generator is preferred.

Drying the porous carbon product prior to the second reducing in size step is preferably performed using a paddle dryer, a roller dryer or a belt dryer or a combination of at least two thereof. Drying the porous carbon product after the second reducing in size step is preferably performed using one selected from the group consisting of a spray dryer, a paddle dryer a roller dryer, and a belt dryer, or a combination of at least two thereof.

By classifying the porous carbon product preferably oversized particles of the porous carbon product are separated from the rest of the porous carbon product. Preferred oversized particles are characterised by particle sizes of more than 300 ¡tm, preferably more than 200 ¡tm, more preferably more than 100 µm.

Furthermore, by classifying the porous carbon product preferably at least one mode of a multimodal particle size distribution of the porous carbon product is separated from the porous carbon product. After classifying a D₅₀ of a particle size distribution of the porous carbon product is preferably in the range from 30 to 50 µm, preferably from 32 to 48 ¡tm, more preferably from 35 to 45 µm.

The porous carbon product can comprise a plurality of carbon particles, wherein at least 40 wt.-%, preferably at least 60 wt.-%, more preferably at least 90 wt.-%, of the carbon particles are a monolithic carbon body. Preferably, the carbon particles of the plurality of carbon particles are non-spherical. Preferred non-spherical carbon particles are flakes or rods or both. Further preferred non-spherical carbon particles are characterised by a dimension ratio of at least 5, preferably of at least 10. Preferred non-spherical carbon particles are characterised by a thickness in the range from 10 to 500 ¡tm, preferably from 20 to 100 ¡tm, more preferably from 20 to 50 µm.

### Continuous Process

Multiple steps are carried out whilst the porous silicon dioxide material and where relevant the comprised carbon source/porous material is present on the substrate surface. The substrate surface is preferably a drum surface or a belt surface or the like and multiple steps may be performed as the substrate surface, preferably the belt, passes through appropriate locations for the steps to be performed.

### Applications

Preferred applications of a porous carbon product obtained by the process of to the invention are those which harness one or more advantageous properties of the porous carbon product, preferably one or more selected from the group consisting of: improved purity, improved electrical conductivity, improved ionic conductivity, improved gas permittivity, improved adsorption and/or absorption, improved adsorption capacity and/or absorption capacity, increased specific surface area, pore hierarchy, and improved tunability of any thereof.

An active material, preferably a catalyst, can be supported on the porous carbon product obtainable by a process according to the invention. In one aspect of this embodiment, the catalyst is suitable for gas phase catalysis. In another aspect of this embodiment, the catalyst is suitable for liquid phase catalysis.

A fuel cell, preferably a liquid fuel cell or a gas fuel cell, more preferably a gas fuel cell can comprise a porous carbon product as obtained by the process of the invention. Preferred fuel cells are suitable for use with one or more fuels selected from the group consisting of: hydrogen, a hydrocarbon, an alcohol, a ketone and an aldehyde; more preferably one or more selected from the group consisting of: hydrogen, an alcohol and a hydrocarbon; most preferably hydrogen. Preferred hydrocarbons in this context are alkenes and alkanes, preferably alkanes. Preferred alkenes in this context are one or more selected from the group consisting of: ethene, propene and butene; more preferably one or more selected from the group consisting of ethene and propene; most preferably ethene. Preferred alkanes in this context are one or more selected from this group consisting of: methane, ethane, propane and butane; more preferably one or more selected from the group consisting of methane and ethane; most preferably methane.

An electrical cell comprising the porous carbon product obtainable by a process according to the invention can be produced. The porous carbon material obtained by the process according to the invention can be at least partially comprised in one or more electrodes or in an electrolyte or in both one or more electrodes and an electrolyte. It is particularly preferred for such porous carbon product to be present in or on a cathode. Preferred electrical cells in this context are secondary cells or primary cells, preferably secondary cells. Preferred primary cells are one or more selected from the group consisting of: an alkaline battery, an aluminium ion battery, a lithium battery, a nickel oxyhydride battery and a zinc carbon battery. Preferred secondary cells are one or more selected from the group consisting of: a lead-acid battery, a lithium ion battery, a lithium sulphur battery, a lithium titanate battery, a nickel cadmium battery, a nickel hydrogen battery, a nickel metal hydride battery and a nickel zinc battery; preferably a lithium ion battery. A device comprising the porous carbon product obtained by the process of the invention can be produced, the device being one or more selected from the group consisting of: a capacitor, preferably a super-capacitor, an absorption and/or storage material for a liquid, an absorption and/or storage material for a gas, a carrier material for use in chromatography and a raw material for engineering and/or medical applications.

Preferred features according to an embodiment of a category according to the disclosure; in particular according to the process and the porous carbon material are also preferred in an embodiment of the other categories respectively if said other category relates to the same or similar term or entity.

### Pore structure

A preferred pore structure is one selected from the group consisting of a porosity, a pore size distribution, a total pore volume, and a geometric pore structure, or a combination of at least two thereof.

### Reaction zone

A preferred reaction zone is at least one flame. A preferred flame is a flame of a burner.

### Agglomeration

Preferably, process step b) of the process according to the invention further comprises an agglomeration of the particles of the first plurality of particles, thereby obtaining secondary particle as agglomerates of primary particles. The term first plurality of particles is used herein for the primary particles as well as for the secondary particles which are preferably formed by agglomeration.

### Sintering

The template is preferably partially sintered, which means the template is not sintered throughout. Thus, a compact material with lowest possible porosity is preferably not obtained.

### Dimension ratio

The dimension ratio of a particle is the ratio of the length of the particle to its thickness. The length of the particle is the length of the longest extent of the particle. The length of the particle extends along a first Cartesian direction. The width of the particle extends along a second Cartesian direction, wherein the width the length of the longest extent of the particle which is perpendicular to the length. Hence, the width is equal to or less than thelength of the particle. The thickness of the particle extends along a third Cartesian direction, wherein the thickness is equal to or less than the width of the particle. Hence, the length, the width and the thickness are measured in directions which are perpendicular to each other, wherein the length is equal to or more than the width, which is equal to or more than the thickness. A particle is referred to being spherical if the width and the thickness of the particle do not differ by more than 20 %, preferably not more than 10 %, more preferably not more than 5 %, from the length of the particle. A particle is referred to as being a rod if the length of the particle is at least 2 times, preferably at least 3 times, the width of the particle and at least 2 times, preferably at least 3 times, the thickness of the particle. A particle is referred to as being a flake if the thickness of the particles is not more than 60 %, preferably not more than 50 %, more preferably not more than 30 %, of the length of the particle and not more than 60 %, preferably not more than 50 %, more preferably not more than 30 %, of the width of the particle.

### Electrochemical device

A preferred electrochemical device is a battery or a fuel cell or both. A preferred battery is a rechargeable battery or a secondary battery or both. A preferred secondary battery is a lithium-ion-battery. A preferred lithium-ion-battery is one selected from the group consisting of a lithium-polymer-battery, a lithium-titanate-battery, a lithiummanganese-battery, a lithium-iron-phosphate-battery, a lithium-cobalt-oxide-battery, a lithium-cobalt-nickel-manganese-oxide-battery, a lithium-cobalt-manganese-nickel-aluminium-oxide-battery, (all combinations Ni Al Co Mn) , a lithium-sulphur-battery, and a lithium-air-battery, or a combination of at least two thereof. Another preferred lithium-ion-battery comprises one selected from the group consisting of Ni, Al, Co and Mn, or a combination of at least two thereof in an Li-comprising electrode.

### TEST METHODS

The following test methods are used in the invention. In absence of a test method, the ISO test method for the feature to be measured being closest to the earliest filing date of the present application applies. In absence of distinct measuring conditions, standard ambient temperature and pressure (SATP) as a temperature of 298.15 K (25 °C, 77 °F) and an absolute pressure of 100 kPa (14.504 psi, 0.986 atm) apply.

### Bulk density

The bulk density measurements were performed according to DIN ISO 697 (1984).

### Skeletal density (also referred to as material density or backbone density)

The skeletal density measurements were performed according to DIN 66137-2. Between 0.49g and 0.51g of the powder sample were weighed in the sample cell and dried at 200 °C under vacuum for 1h prior to the measurement. The mass after drying was used for the calculation. A Pycnomatic ATC Helium Pycnometer from Themo Fisher Scientific, Inc. was used for the measurement, employing the "small" sample volume and the "small" reference volume. The pycnometer is calibrated monthly using the "extra small" sphere with a well-known volume of around 3 cm³. Measurements were performed using Helium with a purity of 4.6, at a temperature of 20.00 °C and a gas pressure of approx. 2 bar, according to the DIN standard and the SOP of the device.

### Mercury porosimetry (pore size and pore volume)

The specific pore volume for different pore sizes, the cumulative pore volume, and the porosity were measured by mercury porosimetry. The mercury porosimetry analysis was performed according to ISO15901-1 (2005). A Thermo Fisher Scientific PASCAL 140 (low pressure up to 4bar) und a PASCAL 440 (high pressure up to 4000bar) and SOLID Version 1.6.3 (26.11.2015) software (all from Thermo Fisher Scientific, Inc.) were calibrated with porous glass spheres with a modal pore diameter of 140.2 nm and pore volume of 924.4 mm³/g (ERM-FD122 Reference material from BAM). During measurements the pressure was increased or decrease continuously and controlled automatically by the instrument running in the PASCAL mode and speed set to 8 for intrusion and 9 for extrusion. The Washburn method was employed for the evaluation and the density of Hg was corrected for the actual temperature. Value for surface tension was 0.48 N/m and contact angle 140°. Sample size was between about 25 and 80 mg. Before starting a measurement, samples were heated to 150°C in vacuum for 1 hour.

### BET-SSA / specific surface area and BJH-BET (pore size, pore volume)

BET measurements to determine the specific surface area (BET-SSA) of particles are made in accordance with DIN ISO 9277:2010. A NOVA 3000 (from Quantachrome) which works according to the SMART method (Sorption Method with Adaptive dosing Rate), is used for the measurement. As reference material Quantachrome Alumina SARM Catalog No. 2001 (13.92 m²/g on multi-point BET method), and SARM Catalog No. 2004 (214.15 m²/g on multi-point BET method) available from Quantachrome are used. Filler rods are added to the reference and sample cuvettes in order to reduce the dead volume. The cuvettes are mounted on the BET apparatus. The saturation vapour pressure of nitrogen gas (N2 4.0) is determined. A sample is weighed into a glass cuvette in such an amount that the cuvette with the filler rods is completely filled and a minimum of dead volume is created. The sample is kept at 200°C for 1 hour under vacuum in order to dry it. After cooling the weight of the sample is recorded. The glass cuvette containing the sample is mounted on the measuring apparatus. To degas the sample, it is evacuated at a pumping speed selected so that no material is sucked into the pump to a final pressure of 10 mbar.

The mass of the sample after degassing is used for the calculation. For data analysis the NovaWin 11.04 Software is used. A multi-point analysis with 5 measuring points is performed and the resulting specific surface area (BET-SSA) given in m²/g. The dead volume of each sample cell is determined once prior the measurement using Helium gas (He 4.6, humidity 30 ppmv). The glass cuvettes are cooled to 77 K using a liquid nitrogen bath. For the adsorptive, N₂ 4.0 with a molecular cross-sectional area of 0.162 nm² at 77 K is used for the calculation.

The mesopore size distribution and mesopore volume (BET-BJH) are derived from the desorption isotherm by means of the BJH pore size model according to ISO15901-2 at relative pressures of more than 0.35.

The empirical t-plot methodology is used according to ISO15901-3:2007 to discriminate between contributions from micropores and remaining porosity at relative pressures of more than 0.1 (i.e. mesoporosity, macroporosity and external surface area contributions) and to calculate the micropore surface and micropore volume. The low pressure isotherm data points up to a cut-off *p*/*p₀*, typically up to 0.1 *p*/*p₀* are selected to determine the linear section of the t-plot. Data point selection is validated by obtaining a positive C constant. The micropore volume is determined from the ordinate intercept. The micropore specific surface area can be calculated from the slope of the t-plot.

### Tap density

The Tap density was measured according to DIN EN ISO 787-11 (1995).

### Aspect ratio / particle dimensions

In accordance with ISO 9276-1, ISO 9276-6 and ISO13320 the morphology and form of the particles was analysed using a QICPIC-picture analysis system (Sympatec GmbH System-Partikel-Technik Germany). Dry dispersion of the particles was performed using pressurised air with the RODOS/L (0.50 63.0 mm) unit attached to the QICPIC. The measuring area was set to M6 which covers particles with a diameter of about 5 to 1705 µm. Additional parameters were: picture frequency = 450 Hz, conveying rate VIBRI = 20 %, funnel height = 2 mm, inner diameter of dispersion tube = 4 mm, pressure 1 bar. EQPC (Diameter of a circle having the same area as the projection area of the particle), FERET MIN (minimum diameter or breadth of a particle) and FERET MAX (maximum diameter or width of a particle) were determined. The aspect ratio was calculated according to the formula FERET_MIN / FERET_MAX. The aspect ratio is calculated by using the x50 values of the FERET_MAX and FERET_MIN distribution of a sample.

### Particle size distribution

Laser diffraction (D₁₀, D₅₀, D₉₀):
For particle size determination of the particles a laser diffraction method was used according to ISO Standard 13320. A Mastersizer 3000 from Malvern equipped with a He-Ne Laser (wave length of 632.8 nm with a maximum power of 4 mW) and a blue LED (wave length of 470 nm with a maximum power of 10 mW) and wet dispersing unit (Hydro MV) was employed for the measurements performed at ambient temperature of 23°C. A mixture of isopropanol and deionized water (50% / 50%) was used as measurement medium. The mixture was degassed in the dispersing unit by using the built-in stirrer at 3500 rpm and ultrasonicate at maximum power for 10 seconds. The sample material is prepared as a concentrated dispersion in 100% isopropanol (40 mL). The quantity of material is sufficient to create a homogeneous mixture after the ultrasonic finger mixing for 30 seconds. The sample is added to the dispersing unit drop-wise with a pipette until the obscuration value is between 3-7%. The values of D₁₀, D₅₀ and D₉₀ (volume based) were determined using the Malvern software Mastersizer 3000 Software 3.30, and a form factor of 1. The Fraunhofer theory is used for samples where the particles are > 10 µm and the Mie theory is applied to materials where the particles are < 10 µm.

Sieving (weight fraction having particle size of more than 315 µm):
Sieving for weight fractions with particles having a size larger than 315 µm were performed carefully with a sieve with an Air Jet RHEWUM LPS 200 MC sieving machine (RHEWUM GmbH) equipped with a sieve with 315 µm openings from Haver und Böcker (HAVER & BOECKER OHG).

### Impurity content

The impurity content of the porous carbon material is performed by Inductively Coupled Plasma Optical Emission Spectrometry (ICP-OES) analogue to DIN EN ISO 11885. Prior to measurement, the porous carbon sample is ashed and digested in such a manner that no solid residue remains after digestion of the ash. This ashing and digesting process is available commercially from the analytics service provider Wolfener Analytik GmbH, Bitterfeld-Wolfen, Germany according to test method documented as "Totalaufschluss-Veraschung" of 22/04/2015. Approximately 50g of the porous carbon material is used per analysis. The average impurity value of three analyses is reported ppm by weight (mg/kg).

### EXAMPLES

The present invention is now explained in more detail by examples and drawings given by way of example which do not limit it. The figures are not true to scale if not given otherwise, e.g. by providing a scale.

Production of the porous carbon product according to the inventive process

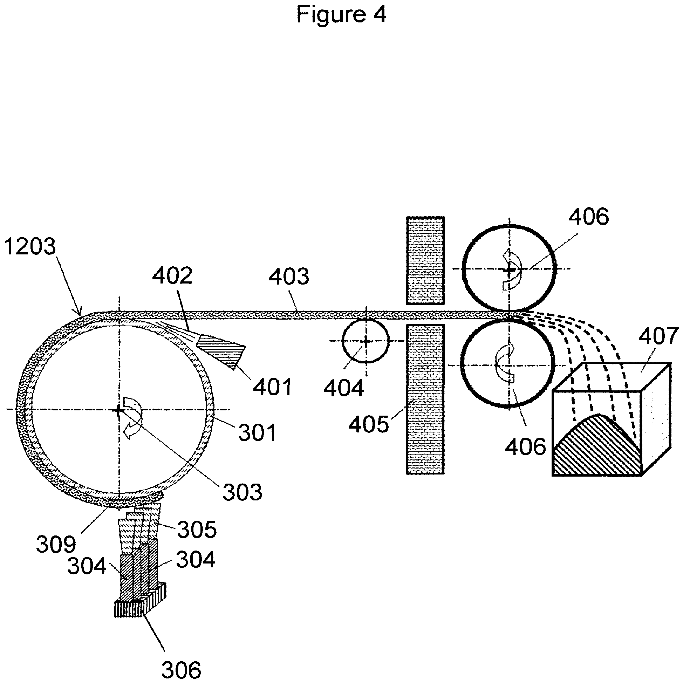

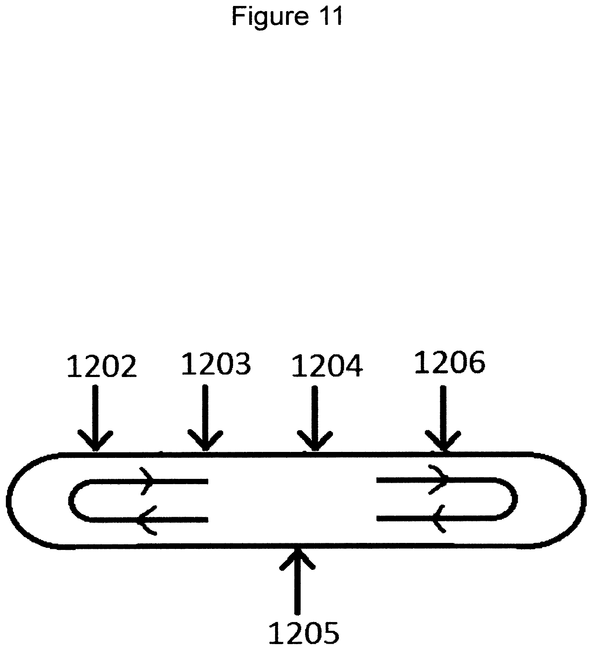

The porous carbon product is obtained in a setup as shown in figure 11. The deposition and removal steps are as described in the context of figure 4 below. Therein, oxygen, hydrogen, nitrogen and octamethyltetracyclesilane (OMCTS) are fed into the burners in order to obtain a bright light white flame. The steps of
1. silicon dioxide layer deposition and optional heat treatment for densification of the silicon dioxide material,
2. impregnation with carbon source,
3. carbonisation and
4. reducing in size
5. removal of the template
are described below.

### 1. silicon dioxide layer deposition and optional heat treatment

In a first example of the first step of the inventive process, the silicon dioxide material is deposited onto a stainless steel drum by combustion of a feed comprising hydrogen, oxygen, nitrogen and OMCTS in a burner, obtaining a bright white flame that is perpendicular to the substrate surface.. At a tangential velocity of the drum of 1.5 m/min, a layer thickness of the pristine porous silicon dioxide layer of 45 µm is achieved. The BET SSA of the pristine layer is 50 m²/g.

An oxy-hydrogen flame, angled at 20° from perpendicular to the substrate surface so as to be directed against the direction of movement of the substrate surface and positioned a quarter of a drum turn following the first flame in the direction of rotation of the drum, at a burner-substrate distance of 30 mm, is employed to densify and sinter the deposited silicon dioxide layer to a final layer thickness of 25 ¡tm, with a BET-SSA of 33 m²/g.

The densified silicon dioxide layer is lifted off the drum by means of an alumina blade and subsequently transferred onto a stainless steel conveyor belt, moving at the same speed as the tangential velocity of the drum. After thermal equilibration with the stainless steel belt, a temperature of layer and belt of approximately 400 °C is reached, re-using the process heat from silicon dioxide deposition and anneal for the next process step.

In a second example of the first step of the inventive process, the silicon dioxide material is deposited onto a hightemperature austenitic stainless steel belt, that is wound around a stainless steel water-cooled drum. By combustion of a feed comprising hydrogen, oxygen, nitrogen and OMCTS in a burner, a bright white flame that is perpendicular to the substrate surface, is obtained.. At a linear velocity of the belt of 1.5 m/min, a layer thickness of the pristine porous silicon dioxide layer of 45 µm is achieved. The BET SSA of the pristine layer is 101 m²/g.

Immediately after deposition, the belt with the silicon dioxide layer is fed through a conveyor-belt oven, where the layer is densified by annealing at a temperature of 1150 °C for 60 minutes, yielding a BET-SSA of 62 m²/g. Subsequently, after leaving the oven, the layer is cooled down on the belt to approx. 400 °C, and the belt is fed into the next process step.

In a third example of the first step of the inventive process, the silicon dioxide material is deposited onto a polished Al₂O₃ drum. By combustion of a feed comprising hydrogen, oxygen, nitrogen and OMCTS in a burner, a bright white flame that is perpendicular to the substrate surface, is obtained. The drum is heated by the flame to a substrate temperature of 1300 °C. This yields a silicon dioxide layer with a thickness of 22 ¡tm, and a BET-SSA of 35 m²/g.

The silicon dioxide layer is lifted off the drum by means of an alumina blade and subsequently transferred onto a stainless steel conveyor belt, moving at the same speed as the tangential velocity of the drum. After thermal equilibration with the stainless steel belt, a temperature of layer and belt of 450 °C is reached, re-using the process heat from silicon dioxide deposition and anneal for the next process step.

### Production of the comparative silicon dioxide product

The porous silicon dioxide product is obtained by a process as for the inventive example except that the porous silicon dioxide material is removed from the substrate surface immediately following deposition and all further steps are carried out batch wise. The removed silicon dioxide is heat treated at a temperature of 1200 °C for 60 minutes to adapt the pore structure. Afterwards, the adapted silicon dioxide is reduced in size to flakes which have a mean value for their largest dimension of 5 mm and of 35 µm for their smallest dimension. This corresponds to 1-3 layer thicknesses for the smallest dimension.

### 2. Impregnation with carbon source

In the inventive examples, a coal tar pitch (Carbores P15 available from Rütgers, having a softening point in the range from 320 to 350°C) is homogeneously applied to the surface of the porous silicon dioxide material whilst it is still on the substrate surface. The amount of coal tar pitch per unit area of substrate surface is chosen in a way that the weight ratio of coal tar pitch:porous silicon oxide is 1:2. The temperature of the porous silicon dioxide material is maintained at a temperature of 350°C to allow the coal tar pitch to melt and impregnate the pores of the porous silicon dioxide material.

In the comparative example, the removed porous silicon dioxide material is first reduced in size by milling to give flakes with a thickness of 20 µm and extension in the plane of 500 µm. The flakes of template are then mixed with the P15 powder in a ratio of 2 parts silicon dioxide to 1 part P15 powder by weight. The temperature of the mixture is increased to 350 °C to allow the coal tar pitch to melt and impregnate the pores of the porous silicon material.

The impregnation can be also performed by substituting the above mentioned pitch by an aqueous solution of saccharose with a saccharose content 66 wt.-% prepared at 80 °C.

### 3. Carbonisation

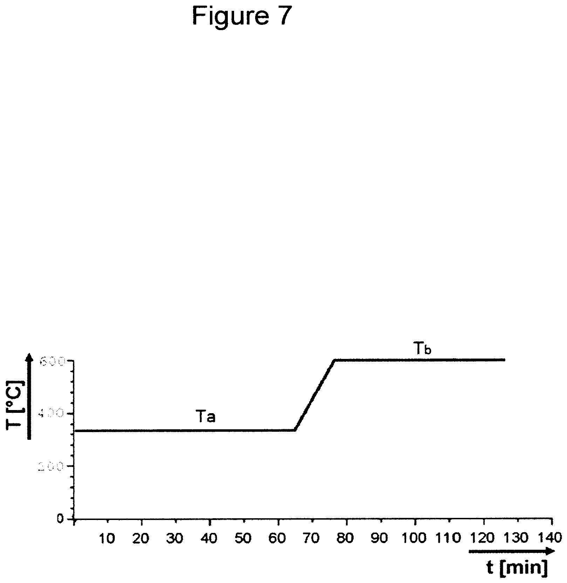

Subsequently to the infiltration process, the temperature is further increased to 700°C. Finishing the carbonisation, a composite body containing porous SiO₂ particles which are at their inner (in the pores) and outer sides coated with a porous carbon is obtained. At least 70 vol.-% of the pores of the carbon are meso-pores having pore sizes in the range from 10 to 150 nm. A diagram of the heating which is performed for infiltration / impregnation and carbonisation is shown in figure 7.

### 4. Reducing in size the composite body / precursor

In the inventive example, the composite body is lifted off the substrate by means of an alumina blade. Due to the layer shape, only slight comminution by compression between stainless steel drums is required to form the desired composite body particles with particle sizes with d₁₀ of 25 µm and d₉₀ of 500 µm.

In the comparative example, the composite body is a strongly agglomerated three-dimensional mass which is needs first to be broken into smaller pieces by a roll crusher, yielding a particle size d₁₀ of 1 mm and d₉₀ of 20 mm. After that it is further reduced in size by means of an hammer mill (Alpine Type 63/50HA, Sieve 6 mm round hole, rotation speed 12 %, throughput 100 kg/h, PEK-filter 20 m², needle-felt, fan 90 %). The thus obtained composite body particles are characterised by particle sizes with d₁₀ of 25 µm and d₉₀ of 350 µm.

### 5. Removal of the template

The SiO₂ template material is removed from the composite particles by introducing the body into a HF bath. After the SiO₂ particles have been removed by etching, the remaining material is rinsed with water, dried and reduced in size in order to obtain flakes of porous carbon. The structure of the porous carbon is substantially a negative of the original template material. The carbon material comprises pores which stem from the removal of the template material, as well as pores which stem from the secondary agglomerate structure of the template. Where the primary particles of the template were before, meso-pores are present in the carbon material; and where the sintering necks between the secondary template particles were before, macro-pore channels interconnect the meso-pore regions of the carbon material. The carbon material is referred to as having a hierarchic pore structure. A network of interconnected channels (macro-pores) runs through the meso-pore containing carbon material.

### Width of particle size distribution and pore size distribution

The particle size distribution and pore size distribution of the porous carbon product from the inventive example and from the comparative example were determined using the test methods (for pores having a pore size in the range from 10 to 10000 nm). The width of the distribution in each case was determined by 2 measures. First, the width was determined as the difference between d₁₀ and d₉₀. Second, the width was determined as the width of the range around the major peak representing a volume contribution frequency at least 10% that at the major peak. The results are shown in table 1 and table 2.

**Table 1 - Particle size distribution**

| Example | Process type | Difference between d₉₀ and d₁₀ [µm] | >10% frequency width around major peak [µm] |
|---|---|---|---|
| Inventive (first example) | Continuous | 6 | 5 |
| Comparative | Batch | 14 | 12 |

**Table 2 - Pore size distribution**

| Example | Process type | Difference between d₉₀ and d₁₀ [nm] | >10% frequency width around major peak [nm] |
|---|---|---|---|
| Inventive (first example) | Continuous | 900 | 800 |
| Comparative | Batch | 5100 | 4600 |

As can be seen in the table, the inventive setup facilitated a greater tuning of the particle size distribution and pore size distribution and allowed a distribution to be achieved in each case.

### Impurity content

The metals base of the Iron, Chromium, Manganese, Cobalt, and Nickel impurity content of the porous carbon product from the inventive example and from the comparative example were determined using the test method.

**Table 3 - Impurity content (metals base)**

| Example | Process type | Fe [ppm] | Cr [ppm] | Mn [ppm] | Cu [ppm] | Ni [ppm] | Zn [ppm] |
|---|---|---|---|---|---|---|---|
| Inventive (first example) | Continuous | 28 | <5 | <5 | <5 | 11 | <5 |
| Inventive (second example) | Continuous | 39 | 7 | <5 | <5 | 15 | <5 |
| Inventive (third example) | Continuous | 16 | <5 | <5 | <5 | 8 | <5 |
| Comparative | Batch | 160 | 28 | <5 | 10 | 86 | 27 |

As can be seen in the table, the inventive setup facilitated a lower impurity content in the porous carbon product.

By means of the inventive continuous setup, multiple mechanical processing steps that would introduce impurities (e.g. iron from milling/breaking/crushing tools) could be reduced. In the comparative batch process. up to four comminuting steps are required, while for the continuous process, the number of comminuting steps can be reduced to two. A reduced impurity concentration leads to higher cycle and calendar life-times and reduced defect rates e.g. when applying the product in Li-ion batteries.

The figures show
- 2: a flow chart diagram of a process according to the invention for the production of a porous carbon product;
- 3: a cross-sectional scheme of a setup for performing the deposition of silicon dioxide;
- 4: a cross-sectional scheme of a setup for performing the process according to figure 1;
- 6a): a schematic view of a section of a porous silicon dioxide material according to the disclosure;

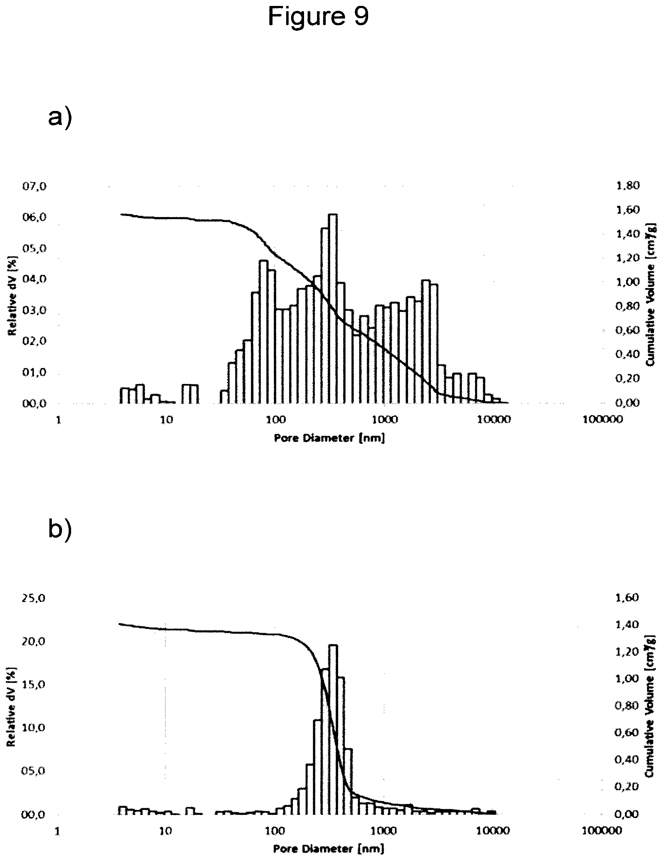

- 6b): a schematic view of a section of a precursor comprising the porous silicon dioxide material and a carbon source;
- 7: a diagram showing a heating profile applied in process steps c) and d);
- 8: a SEM-record of a porous carbon material according to the disclosure;
- 9a): a diagram showing the pore structure of a porous silicon dioxide material according to a process according to the invention;
- 9b): a diagram showing the pore structure of a porous silicon dioxide material of figure 9a); and
- 10: a flow chart diagram illustrating the process according to figure 1 further;
- 11: Schematic for a continuous belt process for preparation of a porous carbon product.

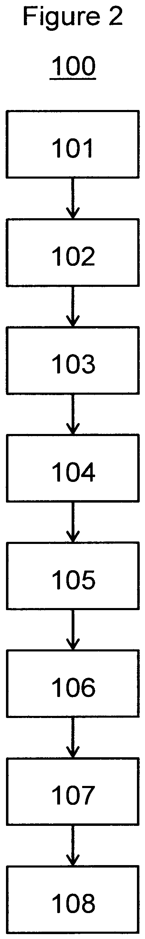

Figure 2 shows a flow chart diagram of a process 100 according to the invention for the production of a porous carbon material. The process 100 comprises a process step 101 of feeding a feed material composition of oxygen, hydrogen and octamethylcyclotetrasiloxane (OMCTS) into a flame 305 of a flame hydrolysis burner 304. In a process step 102 the feed material composition in the flame 305 is reacted into a plurality of primary particles 601 of SiO₂ by a hydrolysis reaction. Said primary particles 601 agglomerate to form secondary particles 602. These secondary particles 602 are deposited on a substrate surface 302 of a substrate 301 in a process step 103. Thereby, a porous silicon dioxide material 309 in form of one layer is obtained. Adapting a pore structure of the porous silicon dioxide material by heating at 900°C 403 represents a process step 104 of the process 100. After the heating to 900°C, the porous silicon dioxide material is cooled to a temperature of 350°C.

In step 105, the template is impregnated with a carbon source 606 which is a mesophase pitch. Therein, mesophase pitch particles are applied to the surface of the template whilst it is still on the substrate surface. The mesophase pitch melts due to the residual heat present in the porous silicon dioxide material. The molten pitch infiltrates the pores of the template. In process step 106 the mixture is heated to a higher temperature of about 650°C in order to carbonise the pitch. Thereby, a precursor comprising carbon and the template is obtained. In a process step 107 the precursor is detached and removed from the substrate surface 302. In process step 108, the template is removed from the precursor by etching in an HF bath. Consequently, a porous carbon product is obtained.

The step of removing material from the substrate surface might by performed at an earlier stage, for example after impregnation with the carbon source in step 105, or even after removal of the template in step 108

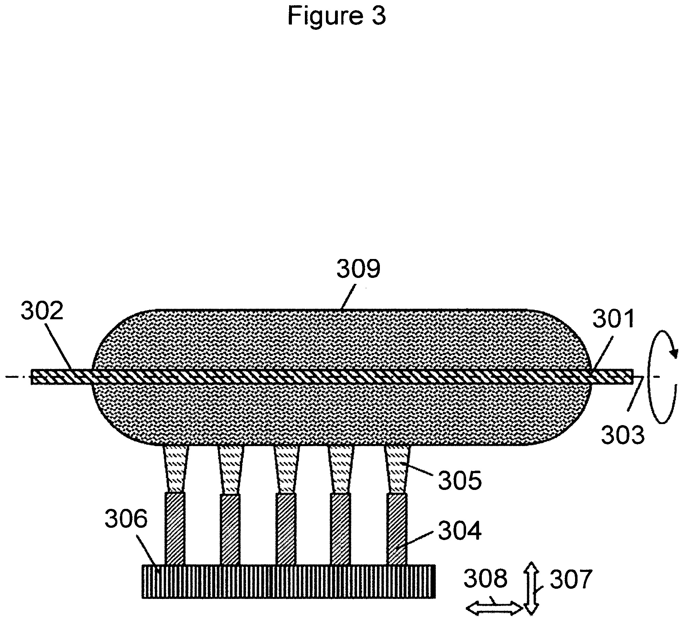

Figure 3 shows a cross-sectional scheme of a setup for performing the process steps (101) to (103) of a process 100 according to the invention for the production of a porous silicon dioxide material 309. The setup comprises a substrate 301 which is a tube 301 made of aluminium oxide. Along the tube 301 a row of flame hydrolysis burners 304 is arranged. Said flame hydrolysis burners 304 are arranged on a single burner feed block 306. Said burner feed block 306 periodically moves back and forth between two turning points in a direction 308 parallel to a longitudinal axis 303 of the tube 301. Furthermore, the burner feed block 306 can be shifted in a direction 307 perpendicular to the longitudinal axis 303. The flame hydrolysis burners 304 are made from fused silica. A distance between two neighbouring flame hydrolysis burners 304 is 15 cm. Pointing towards the substrate surface 302, each flame hydrolysis burner 304 causes a flame 305. Said flames 305 form reaction zones 305 for a hydrolysis reaction. By means of the flame hydrolysis burners 304 SiO₂-soot particles are deposited on the substrate surface 302. Therein, primary particles 601 of diameters on a nm-scale are formed in the flames 305. Said primary particles 601 move towards the substrate surface 302, wherein primary particles 601 agglomerate to form about spherical secondary particles 602. Due to the random nature of agglomeration, the secondary particles 602 comprise different numbers of primary particles 601 and hence show a rather broad secondary particle size distribution. Within the secondary particles 602, between the primary particles 601, rather small cavities and pores are present (nm-scale). Said cavities and pores are called meso-pores. Between the secondary particles 602 macro-pores having a clearance around 400 to 1000 nm are present. During the deposition process, the tube 301 rotates around its longitudinal axis 303 as depicted by an arrow in figure 3. A feed composition which is fed into the flame hydrolysis burners 304 comprises oxygen, hydrogen and octamethylcyclotetrasiloxane (OMCTS). An amplitude of the periodic back and forth movement of the burner feed block 306 is two distances of flame hydrolysis burners 304 (30 cm). While the SiO₂-soot particles are deposited on the substrate surface 302, the latter has a temperature of about 1200°C. By the above described soot deposition process a tube (soot tube) of the porous silicon dioxide material 309 is obtained. Said soot tube has a length of 3 m, an outer diameter of 400 mm and an inner diameter of 50 mm. As the temperature is kept relatively low during formation of the soot tube, the porous silicon dioxide material 309 is characterised by an average relative density of 22 % based on the density of fused silica (2.21 g/cm3).

Figure 4 shows a cross-sectional scheme of a setup for performing the process 100 according to figure 1. The setup comprises a substrate 301 in form of a drum 301 which rotates around its longitudinal axis 303. The drum 301 consists of a body made from stainless steel. The drum 301 has an outer diameter of 30 cm and a length of 50 cm. On a substrate surface 302, which is a lateral surface of the drum 301, one layer of a porous silicon dioxide material 309 of SiO₂ is deposited. In order to obtain the porous silicon dioxide material 309, flame hydrolysis burners 304 are applied. Said flame hydrolysis burners 304 are arranged in a row along a direction parallel to the longitudinal axis 303 of the drum 301. The flame hydrolysis burners 304 are arranged on a single burner feed block 306. Said burner feed block 306 performs a periodic forth and back movement parallel to the longitudinal axis 303. A feed composition which is fed into the flame hydrolysis burners 304 comprises oxygen, hydrogen and octamethylcyclotetrasiloxane (OMCTS). Due to a hydrolysis reaction primary particles 601 are formed in a reaction zone formed from flames of the flame hydrolysis burners 304 which are pointed towards the substrate surface 302. Said primary particles 601 of diameters in the nm-range move towards the substrate surface 302, wherein primary particles 601 agglomerate to form about spherical secondary particles 602. Due to the random nature of agglomeration, the secondary particles 602 comprise different numbers of primary particles 601 and hence show a rather broad secondary particle size distribution. Within the secondary particles 602, between the primary particles 601, rather small cavities and pores are present (nm-scale). Said cavities and pores are called meso-pores. Between the secondary particles 602 macro-pores having a clearance around 400 to 1000 nm are present. The porous silicon dioxide material 309 formed by deposition of the secondary SiO₂ particles on the substrate surface 309 is characterised by a specific surface area according to BET of about 100 m²/g. Said porous silicon dioxide material 309 forms a smooth layer of constant thickness on the substrate surface 302. A tangential velocity of the drum 301 and a rate of deposition are adjusted such that the layer of the porous silicon dioxide material 309 has a length of 40 cm and a thickness of about 35 µm. Said thickness is shown exaggerated in figure 4. The flame hydrolysis burners 304 being directed towards the substrate 301, cause the an outer surface of the porous silicon dioxide material layer to have a temperature of about 1200°C during the above described soot deposition process. This heating action of the flame hydrolysis burners 304 leads to a partial pre-sintering of the secondary particles 602 on the substrate surface 302. Thereby, the secondary particles 602 form sintering necks 603 which interconnect each secondary particle to the other ones, thereby forming the porous silicon dioxide material layer. The porous silicon dioxide material layer is characterised by an average relative density of 22 % based on the density of fused silica (2.21 g/cm³). Subsequently, a carbon source is contacted with the porous silicon dioxide material at point 1203 and then the impregnated porous silicon dioxide material layer (precursor) then experiences the action of an air blower 401. The air blower 401 directs an air stream 402 on a side of the precursor layer facing towards the substrate surface 302. Due to the air stream 402, also known as air knife 402, the precursor 309 is detached and removed from the substrate surface 302. Subsequently, the removed precursor 403 is transported via a transport roller to a reducing in size zone. Said reducing in size zone is separated from the above described setup by a shielding 405. Said shielding 405 is a wall having a opening through which the removed precursor material 403 is transported. In the reducing in size zone the removed porous silicon dioxide material 403 is broken between two rotating rollers 406 which rotate in opposite directions. Therefor, the removed precursor material 403 in form of a removed layer is fed into a gap between the rotating rollers 406. A width of said gap equals the thickness of the removed porous silicon dioxide material layer. Surfaces of the rotating rollers comprise profiles which are oriented in a longitudinal direction of the rotating rollers 406 respectively. By the action of the rotating rollers 406, the precursor 403 is reduced in size into non-spherical particles of about the same size. A thickness of the non-spherical particles, preferably flakes, is about 45 µm. The particles are fed into a furnace chamber 407 for carbonising the carbon source and the template is subsequently removed by etching to obtain the porous carbon product.

In other variants, the porous silicon dioxide may further be treated, preferably thermally treated before impregnation with the carbon source.

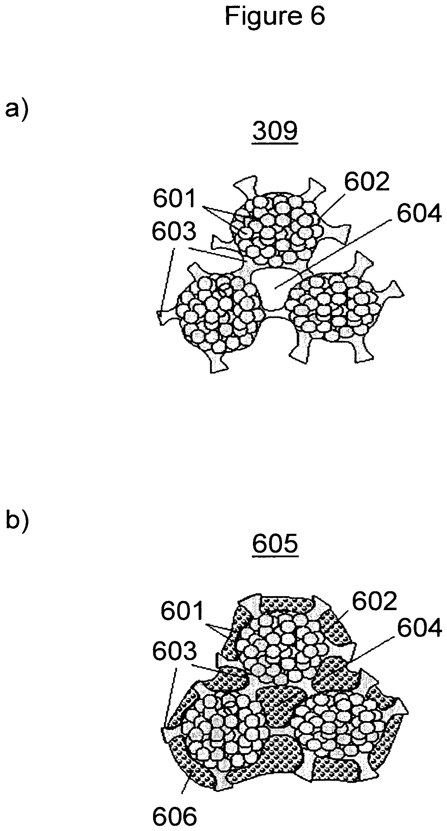

Figure 6a) shows a schematic view of a section of a porous silicon dioxide material 309 according to the invention. The porous silicon dioxide material comprises primary particles 601 which are agglomerated to secondary particles 602. Said secondary particles 602 are connected to each other by sintering necks 603. Said porous material 309 is obtained on the substrate surface 302 of figure 4 as described above.

Figure 6b) shows a schematic view of a section of a precursor comprising the template 309 and a carbon source 606.

Figure 7 shows a diagram showing a heating profile applied in process steps c) and d) of another process 100 according to the invention for the production of a porous product using a coal tar pitch carbon source. Therein, the temperature T is shown in °C over time t in minutes. A temperature Ta between 300°C and 400°C is held to allow molten coal tar pitch to impregnate the porous silicon dioxide material. A temperature around 600°C is held to allow carbonisation of the carbon source.

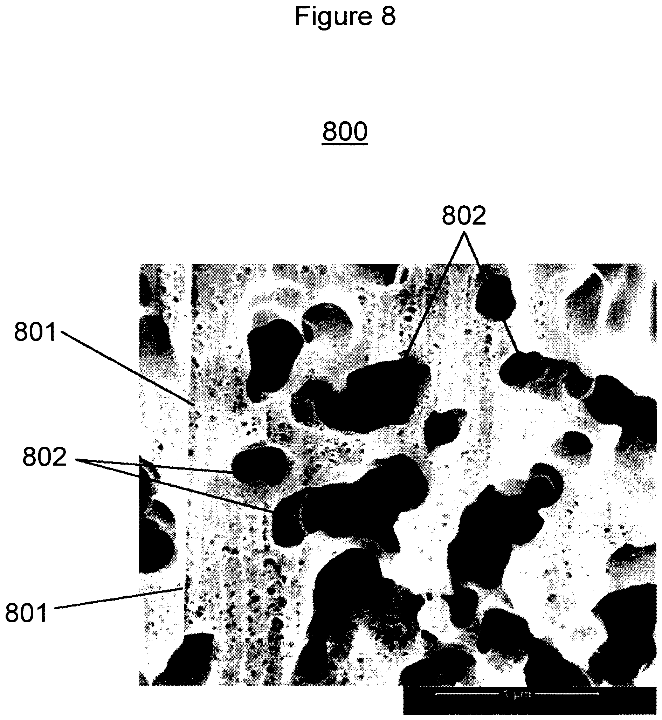

Figure 8 shows a SEM-record of a porous carbon material 800 according to the disclosure. An inner structure of the porous carbon material 800 can be seen. Said inner structure comprises a plurality of interconnected pores and cavities of different sizes. A sponge-like carbon body shows rather fine meso-pores 801. Said sponge-like body is penetrated by larger macro-pores 802 which form channels between the different meso-pore-containing regions. A specific surface area according to BET is about 450 m²/g.

Figure 9a) shows a diagram showing the pore structure of a porous silicon dioxide material 403 according to process 100 according to the invention. The left-hand side of the diagram provides the pore volume in % based on the overall pore volume of the removed porous silicon dioxide material 403. The bars in the diagram show the pore volume for different pore diameters. The right-hand side of the diagram gives the cumulative pore volume in cm³/g removed porous silicon dioxide material 403. The graph shows values of the cumulative pore volume for different pore diameters.

Figure 9b) shows a diagram showing the pore structure of porous silicon dioxide material obtained following heat treatment. The left-hand side of the diagram provides the pore volume in % based on the overall pore volume of the porous silicon dioxide material. The bars in the diagram show the pore volume for different pore diameters. The right-hand side of the diagram gives the cumulative pore volume in cm³/g adapted porous silicon dioxide material. The graph shows values of the cumulative pore volume for different pore diameters. Comparing figures 9a) and 9b) it can be seen that the porous silicon dioxide material has a narrower pore size distribution than the removed porous silicon dioxide material 403. Moreover, the pore size distribution of the porous silicon dioxide material contains only one mode, whereby the pore size distribution of the removed porous silicon dioxide material comprises at least 3 modes.

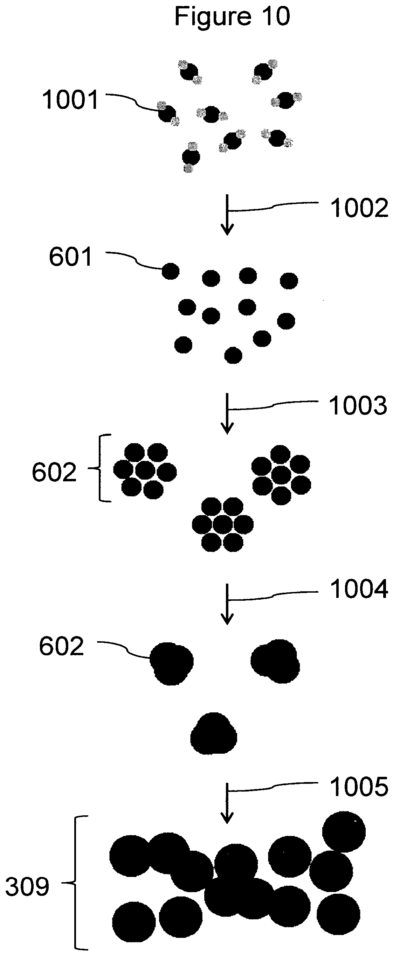

Figure 10 shows a flow chart diagram illustrating the process 100 according to figure 1 further. The precursor 1001 is comprised by the feed material composition which is fed into the reaction zone 305 in process step a) 101 of the process 100. In accordance with figure 1, the precursor 1001 is OMCTS and the feed material composition further comprises oxygen and hydrogen. By thermal decomposition 1002 of the precursor 1001, which according to figure 1 is a hydrolysis reaction, the plurality of primary particles 601 is obtained in process step b) 102. Said primary particles 601 are silicon oxide particles. Further, said primary particles 601 agglomerate (agglomeration 1003), thereby forming the secondary particles 602, also referred to as agglomerates 602. The term first plurality of particles is used as a generic term which comprises the primary particles 601 as well as the secondary particles 602 in the context of the invention. The secondary particles 602 are deposited on the substrate surface 302 of the substrate 301 in the process step c) 103. On the substrate surface 302 the secondary particles 602 are partially sintered (sintering 1004). Thereby, sintering necks 603 connecting the secondary particles 602 to each other are formed. Subsequently or overlapping in time the porous silicon dioxide material 309 of SiO₂ is formed as one layer on the substrate surface 302 (layer formation 1005). The further process steps are described in the context of the figures 1 and 4.

Figure 11 shows a belt setup for preparing a porous carbon product. Silicon dioxide particles are deposited on the belt at position 1202 to obtain a porous silicon dioxide material on the belt. The porous silicon dioxide material (template) is then impregnated with a carbon source at location 1203 whilst the template is still on the belt to obtain a precursor. The precursor is then heated at location 1204 whilst still on the belt in order to carbonise the carbon source. At location 1206, the template is removed from the precursor to leave a porous carbon material. Finally, at location 1205, the porous carbon product is removed from the belt by an air blade. In other variants, further steps could be included, such as further thermal treatments of the porous silicon dioxide material or of the porous carbon material, and more or less steps could be performed on the belt. For instance, the step of removing the template form the precursor to obtain the porous carbon product could be performed off the belt.

A thermal treatment of the porous silicon dioxide material could also be carried out after deposition 1202 and impregnation with the carbon source 1203.

### LIST OF REFERENCES

- **100**: process according to the invention for the production of a porous product
- **101**: process step 101
- **102**: process step 102
- **103**: process step 103
- **104**: process step 104
- **105**: process step 105
- **106**: process step 106
- **107**: process step 107
- **108**: process step 108
- **301**: substrate / tube / drum
- **302**: substrate surface
- **303**: longitudinal axis
- **304**: reaction burner / flame hydrolysis burner
- **305**: reaction zone / flame
- **306**: burner feed block
- **307**: direction perpendicular to longitudinal axis
- **308**: direction parallel to longitudinal axis
- **309**: porous silicon dioxide material / template
- **401**: air blower
- **402**: air stream / air knife
- **403**: removed precursor
- **404**: transport roller
- **405**: Shielding
- **406**: rotating roller
- **407**: furnace chamber

- **601**: primary particle
- **602**: secondary particle / agglomerate
- **603**: sintering neck
- **604**: macro-pore of template
- **605**: precursor with carbon source and template
- **606**: carbon source
- **800**: porous carbon material
- **801**: meso-pore
- **802**: macro-pore of porous carbon product
- **1001**: Precursor
- **1002**: thermal decomposition
- **1003**: Agglomeration
- **1004**: Sintering
- **1005**: layer formation

## Claims

1. A process for the production of a porous carbon product comprising the process steps of:
a) Providing a substrate surface;
b) Depositing silicon dioxide as a layer on the substrate surface, thereby obtaining a porous silicon dioxide material;
c) Contacting the porous silicon dioxide material on the substrate surface with a first carbon source thereby obtaining a first precursor comprising the porous silicon dioxide material and the first carbon source;
d) Heating the first precursor thereby obtaining a second precursor comprising the porous silicon dioxide material and carbon; and
e) At least partially removing the silicon dioxide in the second precursor, thereby obtaining the porous carbon product.

2. The process according to claim 1, wherein one or more of the following criteria is fulfilled:
a. The deposition in step b) is performed at a deposition location, wherein the deposition location and the substrate surface are movable relative to each other;
b. The contacting in step c) is performed at a contacting location, wherein the contacting location and the substrate surface are movable relative to each other;
c. The heating in step d) is performed at a heating location, wherein the heating location and the substrate surface are movable relative to each other;
d. The at least partial removal in step e) is performed at a removal location, wherein the removal location and the substrate surface are movable relative to each other.

3. The process according to any of the preceding claims, wherein the silicon dioxide layer is deposited in step b) in not more than 20 layers.

4. The process according to any of the preceding claims, wherein the process is a continuous process.

5. The process according to any of the preceding claims, wherein the substrate surface is one or both selected from:
a. The surface of a belt;
b. The surface of a rigid body.

6. The process (100) according to any of the preceding claims, comprising a step in which one of the following is broken up:
a. The first precursor;
b. The second precursor;
c. The porous carbon product.

7. The process according to any of the preceding claims, wherein silicon dioxide is deposited at two or more separate locations.

## Patentansprüche

1. Verfahren zur Herstellung eines porösen Kohlenstoffprodukts, umfassend die Verfahrensschritte:
a) Bereitstellen einer Substratoberfläche;
b) Abscheiden von Siliziumdioxid als eine Schicht auf der Substratoberfläche, wodurch ein poröses Siliziumdioxidmaterial erhalten wird;
c) Inkontaktbringen des porösen Siliziumdioxidmaterials auf der Substratoberfläche mit einer ersten Kohlenstoffquelle, wodurch ein erster Vorläufer erhalten wird, der das poröse Siliziumdioxidmaterial und die erste Kohlenstoffquelle umfasst;
d) Erhitzen des ersten Vorläufers, wodurch ein zweiter Vorläufer erhalten wird, der das poröse Siliziumdioxidmaterial und Kohlenstoff umfasst; und
e) mindestens teilweises Entfernen des Siliziumdioxids in dem zweiten Vorläufer, wodurch das poröse Kohlenstoffprodukt erhalten wird.

2. Verfahren nach Anspruch 1, wobei eines oder mehrere der folgenden Kriterien erfüllt sind:
a. Die Abscheidung in Schritt b) wird an einer Abscheidungsstelle durchgeführt, wobei die Abscheidungsstelle und die Substratoberfläche relativ zueinander beweglich sind;
b. Das Inkontaktbringen in Schritt c) wird an einer Kontaktstelle durchgeführt, wobei die Kontaktstelle und die Substratoberfläche relativ zueinander beweglich sind;
c. Das Erhitzen in Schritt d) wird an einer Heizstelle durchgeführt, wobei die Heizstelle und die Substratoberfläche relativ zueinander beweglich sind;
d. Das mindestens teilweise Entfernen in Schritt e) wird an einer Entfernungsstelle durchgeführt, wobei die Entfernungsstelle und die Substratoberfläche relativ zueinander beweglich sind.

3. Verfahren nach einem der vorstehenden Ansprüche, wobei die Siliziumdioxidschicht in Schritt b) in nicht mehr als 20 Schichten abgeschieden wird.

4. Verfahren nach einem der vorstehenden Ansprüche, wobei das Verfahren ein kontinuierliches Verfahren ist.

5. Verfahren nach einem der vorstehenden Ansprüche, wobei die Substratoberfläche eines oder beides ist, ausgewählt aus:
a. Der Oberfläche eines Bands;
b. Der Oberfläche eines starren Körpers.

6. Verfahren (100) nach einem der vorstehenden Ansprüche, umfassend einen Schritt, bei dem eines von Folgendem aufgebrochen wird:
a. Der erste Vorläufer;
b. Der zweite Vorläufer;
c. Das poröse Kohlenstoffprodukt.

7. Verfahren nach einem der vorstehenden Ansprüche, wobei das Siliziumdioxid an zwei oder mehr getrennten Stellen abgeschieden wird.

## Revendications

1. Procédé pour la production d'un produit de carbone poreux comprenant les étapes de procédé consistant à :
a) Fournir une surface de substrat ;
b) Déposer du dioxyde de silicium en tant que couche sur la surface de substrat, obtenant ainsi un matériau de dioxyde de silicium poreux ;
c) Mettre en contact le matériau de dioxyde de silicium poreux sur la surface de substrat avec une première source de carbone obtenant ainsi un premier précurseur comprenant le matériau de dioxyde de silicium poreux et la première source de carbone ;
d) Chauffer le premier précurseur obtenant ainsi un deuxième précurseur comprenant le matériau de dioxyde de silicium poreux et du carbone ; et
e) Éliminer au moins partiellement le dioxyde de silicium dans le deuxième précurseur, obtenant ainsi le produit de carbone poreux.

2. Procédé selon la revendication 1, dans lequel un ou plusieurs des critères suivants est rempli :
a. Le dépôt à l'étape b) est mis en œuvre à un emplacement de dépôt, l'emplacement de dépôt et la surface de substrat pouvant être déplacés l'un par rapport à l'autre ;
b. La mise en contact à l'étape c) est mise en œuvre à un emplacement de mise en contact, l'emplacement de mise en contact et la surface de substrat pouvant être déplacés l'un par rapport à l'autre ;
c. Le chauffage à l'étape d) est mis en œuvre à un emplacement de chauffage, l'emplacement de chauffage et la surface de substrat pouvant être déplacés l'un par rapport à l'autre ;
d. L'élimination au moins partielle à l'étape e) est mise en œuvre à un emplacement d'élimination, l'emplacement d'élimination et la surface de substrat pouvant être déplacés l'un par rapport à l'autre.

3. Procédé selon l'une quelconque des revendications précédentes, dans lequel la couche de dioxyde de silicium est déposée à l'étape b) en pas plus de 20 couches.

4. Procédé selon l'une quelconque des revendications précédentes, dans lequel le procédé est un procédé continu.

5. Procédé selon l'une quelconque des revendications précédentes, dans lequel la surface de substrat est l'une ou les deux choisies parmi :
a. La surface d'une courroie ;
b. La surface d'un corps rigide.

6. Procédé (100) selon l'une quelconque des revendications précédentes, comprenant une étape dans laquelle un de ce qui suit est décomposé :
a. Le premier précurseur ;
b. Le deuxième précurseur ;
c. Le produit de carbone poreux.

7. Procédé selon l'une quelconque des revendications précédentes, dans lequel du dioxyde de silicium est déposé à deux emplacements indépendants ou plus.
